# EUROPEAN PATENT SPECIFICATION

(11) **EP 2 907 298 B1**
(45) Date of publication and mention of the grant of the patent: **18.09.2019**
(21) Application number: 12886464.2
(22) Date of filing: 11.10.2012
(51) Int. Cl.: G06T 7/80, G06T 5/00, G06T 7/00, G06T 11/00, H04N 5/217

(54) **IMAGE PROCESSING DEVICE AND IMAGE PROCESSING METHOD**
BILDVERARBEITUNGSVORRICHTUNG UND BILDVERARBEITUNGSVERFAHREN
DISPOSITIF DE TRAITEMENT D'IMAGE ET PROCÉDÉ DE TRAITEMENT D'IMAGE

(43) Date of publication of application: 19.08.2015
(73) Proprietor: LG Electronics Inc., Yeongdeungpo-gu Seoul 150-721 (KR)
(72) Inventor: LEE, Hansung, Seoul 132-740 (KR); PARK, Junbum, Suwon-si Gyeonggi-do 443-744 (KR); SHIN, Jeongeun, Seoul 157-010 (KR); KIM, Seungman, Osan-si Gyeonggi-do 447-719 (KR)
(74) Representative: Frenkel, Matthias Alexander
(86) International application number: PCT/KR2012/008254
(87) International publication number: WO 2014/058086

(56) References cited:
- JP-A- 2012 124 670
- US-A1- 2005 146 607
- US-A1- 2010 033 567
- US-A1- 2011 013 021
- US-A1- 2011 242 363
- Yu-Chih Liu ET AL: "Bird's-Eye View Vision System for Vehicle Surrounding Monitoring" In: "Robot Vision", 1 January 2008 (2008-01-01), Springer Berlin Heidelberg, Berlin, Heidelberg, XP055004046, ISBN: 978-3-54-078157-8 vol. 4931, pages 207-218, DOI: 10.1007/978-3-540-78157-8_16, * abstract * * page 207, paragraph 2 - page 210, paragraph 1 *
- HARRIS C ET AL: "A COMBINED CORNER AND EDGE DETECTOR", ALVEY VISION CONFERENCE. PROCEEDINGS OF THE ALVEY VISIONCONFERENCE, XX, XX, 1 January 1988 (1988-01-01), page 147, XP001155775,
- ZHANG: "A flexible new technique for camera calibration", IEEE TRANSACTIONS ON PATTERN ANALYSIS AND MACHINE INTELLIGENCE, vol. 22, no. 11, 1 November 2000 (2000-11-01), page 1330, XP055037019, USA ISSN: 0162-8828, DOI: 10.1109/34.888718

## Description

### Technical Field

The present invention relates to an image processing device and an image processing method.

### Background Art

A CMOS camera obtains an image through a process in which an image of a subject focused on a CMOS image sensor after being projected to an optical lens is processed or transformed according to an optical principle.

In particular, when a camera (or a wide-angle camera) equipped with a wide-angle lens such as a fish-eye lens has a short focal length and wide field of view (FOV) and an obtained image has very severe radial distortion when compared to a case of using a standard lens.

An image obtained by the wide-angle camera has non-linearity, and thus, in order to correct the generated distortion, in general, a method of reversely analyzing an optical principle is used, and this method includes a distortion correction formula obtained by modeling the light center, a focal length of a lens, and a refractive index of a lens, or the like.

When given distortion factors (the light center, focal length, etc.) and the distortion correction formula are incorrect, rectilinearity cannot be perfectly made and marks of radial distortion remain in portions of an image. Thus, the use of accurate information regarding distortion factors and distortion correction formula is essential requirements in restoring linearity.

The distortion correction formula of a lens is divided into a form of a lens projection, and this may be provided together with a focal length of a lens from a lens maker. However, due to a mechanical error in coupling an image sensor and a lens, the light center has a different value, i.e., an error, from a standard specification (a half of width/height).

In the article "Bird's-Eye View Vision System for Vehicle Surrounding Monitoring" (Liu, Y.-C- et al., RobVis 2008, LNCS, pp. 207-218, 2008) it is disclosed to capture images by a plurality of fisheye cameras mounted around a vehicle, to change the captured images into planar images, to detect optimum boundary lines from the planar images, and to merge the planar images along the optimum boundary lines. In this way, the plurality of images captured by the fisheye cameras are integrated into a single, panoramic, and seamless image from a look-down viewpoint.

### Disclosure of Invention

### Technical Problem

Therefore, an object of the present invention is to provide an image processing device and an image processing method.

### Solution to Problem

To achieve these and other advantages and in accordance with the purpose of the present invention, as embodied and broadly described herein, there is provided an image processing device including the features of claim 1.

In an example related to the present disclosure, the input images may include at least one of a front image, a rear image, a leftward image, and a rightward image of the vehicle.

In an example related to the present disclosure, the particular pattern may be a check pattern.

In an example related to the present disclosure, the corner point may be a pixel corresponding to each of corners of a quadrangle included in the check pattern.

In an example related to the present disclosure, the controller may extract two-dimensional (2D) gradient values with respect to pixel values of respective pixels included in the input images, and when a particular 2D gradient value, among 2D gradient values, is equal to or greater than a reference gradient value, the controller may detect corresponding pixel having the particular 2D gradient value, as a feature point corresponding to the particular pattern, and detect the representative feature point based on the detected feature points.

In an example related to the present disclosure, the feature point may be a plurality of points, and the controller may determine feature points existing within a particular region of the input images, among the plurality of feature points, as candidate feature points, and detect a pixel corresponding to average coordinates of the candidate feature points, as the representative feature point.

In an example related to the present disclosure, the particular region may be a region where pixels within a reference pixel distance range from a particular pixel of the input images are positioned.

In an example related to the present disclosure, the average coordinates of the candidate feature points may be pixel coordinates corresponding to an average pixel distance of the candidate feature points from the particular pixel of the input images.

In an example related to the present disclosure, the topology information may include at least one of pixel coordinates and index information with respect to the corner points.

In an example related to the present disclosure, the particular pattern may include a check pattern, the detected representative feature point may be a plurality of points, and the controller may detect four reference corner points corresponding to respective corners of a reference quadrangle included in the check pattern based on the plurality of representative feature points, and detect the topology information based on the four reference corner points.

In an example related to the present disclosure, the controller may detect a pixel corresponding to average coordinates of pixels included in the reference quadrangle, as a center pixel, and detect four representative feature points closest to the center pixel among the representative feature points existing in each of quadrants based on a vertical shaft and a horizontal shaft including the center pixel, as reference corner points.

In an example related to the present disclosure, the controller may detect corner points corresponding to respective corners of quadrangles included in the check pattern based on the reference corner points, and detect the topology information based on the corner points corresponding to the respective corners of the quadrangles.

In an example related to the present disclosure, the controller may extract a first reference distance between two reference corner points adjacent in a particular direction among the reference corner points, detect a representative feature point closest to a position obtained by multiplying the first reference distance by a particular rate in the particular direction, as a corner point of a first quadrangle adjacent to the reference quadrangle, extract a second reference distance between two corner points adjacent in a particular direction among the corner points of the first quadrangle, and detect a representative feature point closest to a position obtained by multiplying the second reference distance by a particular rate in the particular direction, as a corner point of the second quadrangle.

In an example related to the present disclosure, the particular rate may be 2/3.

In an example related to the present disclosure, the particular direction may be a horizontal direction or a second direction.

In an example related to the present disclosure, the controller may detect corresponding corner points of the quadrangles through convolution calculation between the input images and a mask image having a template pattern.

In an example related to the present disclosure, the template pattern may be a sub-check pattern corresponding to a portion of the check pattern.

In an example related to the present disclosure, the controller may select a plurality of candidate light centers within a reference pixel range, detect a candidate corner point by performing correction to distortion generated by the plurality of cameras and homography on the corner points based on each of the plurality of candidate light centers, extract offsets between respective candidate corner points detected based on each of the plurality of candidate light centers and theoretical corner points, and determine a candidate light center corresponding to a minimum offset among the offsets extracted based on each of the plurality of candidate light centers, as an optimal light center.

In an example related to the present disclosure, the reference pixel range may be a range from 6 to 8 from a particular pixel included in the input images.

In an example related to the present disclosure, the offset may be a pixel distance between the candidate corner point detected based on one selected from among the plurality of candidate light centers and the theoretical corner point.

In an example related to the present disclosure, the controller may extract the offset with respect to each of all the corner points corresponding to the particular pattern, extract an average offset of the extracted offsets, and determine a candidate light center corresponding to a minimum average offset among the average offsets extracted based on each of the plurality of candidate light centers, as an optimal light center.

In an example related to the present disclosure, the controller may detect a reference corner point corresponding to a reference pattern included in the particular pattern from the topology information based on the result obtained by performing the correction to distortion and homography, and detect the plurality of theoretical corner points based on the reference corner point.

In an example related to the present disclosure, the controller may detect pixels disposed to be separated by a predetermined pixel distance in a particular direction based on the reference corner point, as the plurality of theoretical corner points.

In an example related to the present disclosure, the input images may include a front image, a rear image, a leftward image, and a rightward image of the vehicle, and the controller may perform correction to distortion generated by the plurality of cameras and homography on each of the front image, the rear image, the leftward image, and the rightward image of the vehicle based on the optimal light center, and match the front image, the rear image, the leftward image, and the rightward image of the vehicle based on the result obtained by performing the correction to distortion and homography to generate a top-view with respect to the vehicle.

To achieve these and other advantages and in accordance with the purpose of the present invention, as embodied and broadly described herein, there is also provided an image processing method including the features of the independent method claim.

In an example related to the present disclosure, the detecting of the representative feature point may include: extracting a two-dimensional (2D) gradient value with respect to a pixel value of each pixel included in the input images; when a particular 2D gradient value among the 2D gradient values is equal to or greater than a reference gradient value, detecting a pixel having the particular 2D gradient value, as a feature point corresponding to the input images; and detecting the representative feature point based on the detected feature point.

In an example related to the present disclosure, the input images may include a check pattern, the detected representative feature point may be a plurality of points, and the detecting of the topology information may include: detecting four reference corner points corresponding to respective corners of a reference quadrangle included in the check pattern based on the plurality of representative feature points; and detecting the topology information based on the four reference corner points.

In an example related to the present disclosure, the determining of the optimal light center may include: selecting a plurality of candidate light centers within a reference pixel range; detecting a candidate corner point by performing correction to distortion generated by the plurality of cameras and homography on the corner points based on each of the plurality of candidate light centers; extracting an offset between each of the candidate corner points detected based on each of the plurality of candidate light centers and a theoretical corner point; and determining a candidate light center corresponding to a minimum offset among offsets extracted based on each of the plurality of candidate light centers, as an optimal light center.

In an example related to the present disclosure, the input images may include a front image, a rear image, a leftward image, and a rightward image of the vehicle, and the method may further include: performing correction to distortion generated by the plurality of cameras and homography on each of the front image, the rear image, the leftward image, and the rightward image of the vehicle based on the optimal light center; and matching the front image, the rear image, the leftward image, and the rightward image of the vehicle based on the result obtained by performing the distortion correction and homography to generate a top-view image with respect to the vehicle.

### Advantageous Effects of Invention

According to an embodiment disclosed in the present disclosure, an image processing device and an image processing method are provided.

According to the image processing device and image processing method disclosed in the present disclosure, the image processing device and image processing method automatically performing calibration of a multi-camera system mounted in a vehicle are provided, so an optical time of a mass-production line for the vehicle can be shortened.

### Brief Description of Drawings

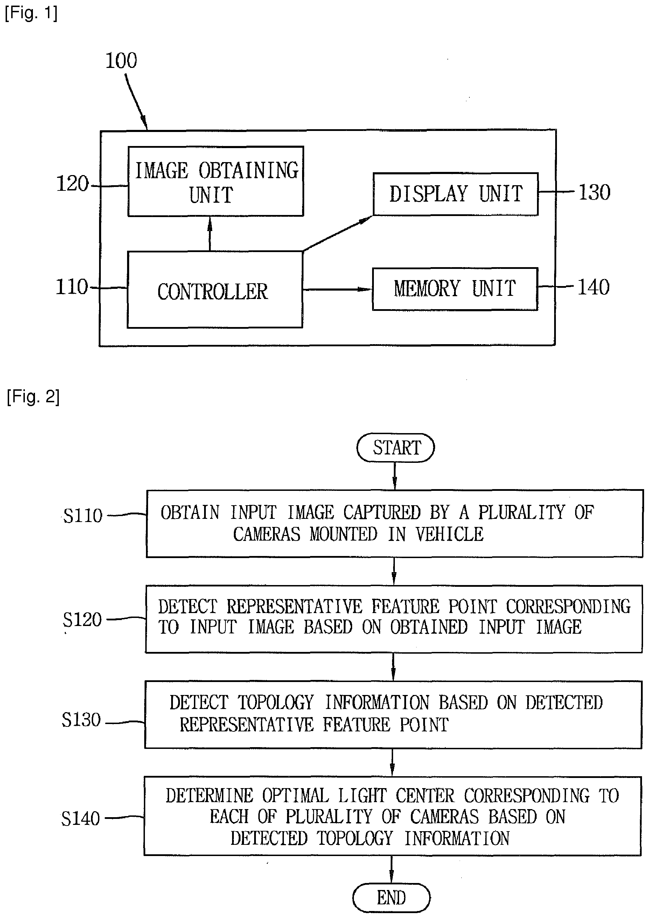

FIG. 1 is a front perspective view of a refrigerator according to the present disclosure;
FIG. 1 is a block diagram showing a structure of an image processing device according to embodiments disclosed in the present disclosure.
FIG. 2 is a flow chart illustrating an image processing method according to embodiments disclosed in the present disclosure.
FIG. 3 is a flow chart illustrating an image processing method for an image processing device according to a first embodiment disclosed in the present disclosure.
FIG. 4 is a view showing a method of detecting a plurality of feature points according to a first embodiment disclosed in the present disclosure.
FIG. 5 is an exemplary view showing a method for detecting a representative feature point according to the first embodiment disclosed in the present disclosure.
FIG. 6 is an exemplary view showing the result of a method for detecting a representative feature point according to the first embodiment disclosed in the present disclosure.
FIG. 7 is a flow chart illustrating an image processing method for an image processing device according to a second embodiment disclosed in the present disclosure.
FIGS. 8a to 8d are exemplary views showing a method for detecting topology information according to the second embodiment disclosed in the present disclosure.
FIGS. 9a and 9b are exemplary views showing a method for detecting a corner point using convolution according to the second embodiment disclosed in the present disclosure.
FIG. 10 is a flow chart illustrating a method for determining an optimal light center of the image processing device according to a fourth embodiment disclosed in the present disclosure.
FIGS. 11a through 13 are exemplary views showing a method for determining an optimal light center of the image processing device disclosed in the present disclosure.
FIG. 14 is a flow chart illustrating an image processing method of an image processing device according to a fifth embodiment disclosed in the present disclosure.
FIGS. 15a and 15b are exemplary views showing an image processing method of an image processing device according to the fifth embodiment disclosed in the present disclosure.

### Mode for the Invention

Reference will now be made in detail to the preferred embodiments of the present invention, examples of which are illustrated in the accompanying drawings. It will also be apparent to those skilled in the art that various modifications and variations can be made in the present invention without departing from the scope of the invention. Thus, it is intended that the present invention cover modifications and variations of this invention provided they come within the scope of the appended claims.

A technique disclosed in the embodiment of the present disclosure may be applied to an image processing device and an image processing method for correcting distortion caused by a camera (especially, a wide angle camera) mounted in a vehicle with respect to an image obtained from the camera. However, the technique disclosed in the present disclosure may also be applied to every image display apparatus (or image display device), a multimedia apparatus, equipment, and a control method thereof.

For example, the technique disclosed in the embodiment of the present disclosure may be applied to various terminals such as a smart phone, a portable terminal, a mobile terminal, a personal digital assistant (PDA), a portable multimedia player (PMP) terminal, a notebook computer, a Wibro terminal, an Internet protocol television (IPTV) terminal, a digital broadcasting terminal, a telematics terminal, a television, a 3D television, an audio/video (A/V) system, a home theater system, an information providing center, a call center, and the like.

Also, the image processing device disclosed in the embodiment of the present disclosure may include an image display device mounted in a vehicle or may interwork with an image display device mounted in a vehicle.

In general, an image display device mounted in a vehicle may capture an image of a subject according to a user request and display the captured image of the subject on a display unit. For example, a black box device for recording an operational state or surroundings by mounting a camera in a vehicle or a parking assistant system for capturing an image of a rear side when a vehicle is backed up by installing a camera at the rear side of the vehicle and outputting the captured image to a display device within the vehicle, and the like.

The camera mounted in a vehicle may be various types of cameras employing various methods. For example, the camera may be a wide angle camera.

For example, a system may be configured by installing wide angle cameras in front and rear sides and left and right lateral surfaces and reconfiguring images captured by these cameras as images viewed from above the vehicle, namely, from an upward direction and outputting the reconfigured images to a display device of the vehicle to thereby promoting drivers' convenience. Such a system may be a bird-eye view system or an around-view monitoring (AVM) system in that it provides an image as if a bird views it from the sky. Such a technique may use a wide angle camera including a fish eye lens in order to secure a wide viewing angle, and when the wide angle camera is used, a distorted image is obtained as an initial image, so a process for correcting the distorted image into an image without distortion may be performed.

The technology disclosed in the present disclosure is applied to wireless power transmission. However, without being limited thereto, the technology disclosed in the present disclosure may be applicable to any power transmission systems and methods, wireless charging circuits and methods, and methods and apparatus using wirelessly transmitted power to which the technical concept of the technology can be applicable.

The terminology used herein is for the purpose of describing particular embodiments only and is not intended to be limiting of the invention. Unless otherwise defined, all terms used herein have the same meaning as commonly understood by one of ordinary skill in the art to which this invention pertains, and should not be interpreted as having an excessively comprehensive meaning nor as having an excessively contracted meaning. If technical terms used herein is erroneous that fails to accurately express the technical idea of the present invention, it should be replaced with technical terms that allow the person in the art to properly understand. The general terms used herein should be interpreted according to the definitions in the dictionary or in the context and should not be interpreted as an excessively contracted meaning.

As used herein, the singular forms "a", "an" and "the" are intended to include the plural forms as well, unless the context clearly indicates otherwise. In the present application, it is to be understood that the terms such as "including" or "having," and the like., are intended to indicate the presence of the features, numbers, operations, actions, components, parts, or combinations thereof disclosed in the specification, and are not intended to preclude the possibility that one or more other features, numbers, operations, actions, components, parts, or combinations thereof may exist or may be added.

While terms such as "first" and "second," and the like, may be used to describe various components, such components must not be understood as being limited to the above terms. The above terms are used only to distinguish one component from another. For example, a first component may be referred to as a second component without departing from the scope of rights of the present invention, and likewise a second component may be referred to as a first component.

The embodiments of the present invention will now be described with reference to the accompanying drawings, in which like numbers refer to like elements throughout, and a repetitive explanation will be omitted.

In describing the present invention, if a detailed explanation for a related known function or construction is considered to unnecessarily divert the gist of the present invention, such explanation has been omitted but would be understood by those skilled in the art. The accompanying drawings of the present invention aim to facilitate understanding of the present invention and should not be construed as limited to the accompanying drawings.

### Description of image processing device according to embodiments disclosed in present invention

An image processing device according to embodiments of the present invention may include an image obtaining unit for obtaining input images captured by a plurality of cameras mounted in a vehicle, and a controller for detecting a representative feature point representing a shape feature of a particular pattern included in the input images, detecting topology information with respect to corner points of the particular pattern based on the detected representative feature point, and determining an optimal light center corresponding to each of the plurality of cameras based on the detected topology information.

The image processing device according to embodiments of the present invention may be applied for a mass-production system for manufacturing a vehicle.

In detail, the image processing device according to embodiments of the present invention may detect (or determine) an optimal light center corresponding to a multi-camera (or a plurality of cameras) mounted in the vehicle and the multi-camera may function to capture an accurate image based on the optimal light center in a vehicle mass-production system. In this sense, the image processing device may be calibration equipment (or system) with respect to a light center of the multi-camera.

According to the image processing device according to embodiments of the present invention, as described above, an optimal light center corresponding to the camera (e.g., a wide angle camera) mounted in a vehicle is automatically detected (or determined) through a calibration operation, so an operation performing time of the mass-production system (or a mass-production line) can be reduced and a cost reduction effect can be increased. In this sense, the image processing device may be a smart calibration device (or system).

Also, the image processing device according to embodiments of the present invention may match the images obtained by the multi-camera based on the detected (or determined)) optimal light center to generate a matched image. Also, the matched image may be generated by an image display device which is included in the image processing device or interworks with the image processing device (or connected through wireline or wirelessly). Also, the image processing device may perform homography on the images obtained by the multi-camera as necessary.

The homography may be interpreted as a general term (or meaning) used in the art. For example, the homography may be a mathematical conversion between two spaces or planes. That is, through the homography, an arbitrary curved line existing in one space may correspond to a curved line existing in a different space, and the arbitrary curved line may be converted based on a conversion relationship between both spaces and correspond to a curved line of a different space. The homography may be performed by a homography matrix representing the conversion relationship. The homography may be applied between a plurality of images having different views. For example, an image captured from a first view (a view from the left of the vehicle) may be converted into an image at a second view (a view from an upper portion of the vehicle). In this case, when a homography matrix (or a conversion matrix) representing the relationship between the first view and the second view is multiplied to each pixel included in the image captured from the first view, an image viewed from the second view may be obtained.

Hereinafter, the image processing device and image processing method disclosed in the present disclosure will be described in detail with reference to FIGS. 1 to 15.

FIG. 1 is a block diagram showing a structure of an image processing device according to embodiments disclosed in the present disclosure.

With reference to FIG. 1, the image processing device 100 according to embodiments disclosed in the present disclosure may include a controller 110 and an image obtaining unit 120.

Also, the image processing device 100 according to an embodiment of the present disclosure may further include a display unit 130 for displaying an image obtained from a camera mounted in a vehicle and displaying an image processing result with respect to the obtained image.

Also, the image processing device 100 according to an embodiment of the present disclosure may further include a memory unit 140 for storing various information such as the obtained image, an image processing procedure of the obtained image, an image processing result, and the like.

In addition, the image processing device 100 may further include various components for performing a calibration operation with respect to the camera mounted in the vehicle.

The components illustrated in FIG. 1 are not essential and the image processing device 100 may be implemented to have greater components or fewer of components.

The components will be described in turn.

The controller 110 may perform various functions to provide a calibration function with respect to the camera mounted in the vehicle.

Basically, the controller 110 may function to control the components of the image processing device 100 so that the calibration function can be properly performed.

According to the embodiments disclosed in the present disclosure, the controller 110 may determine (or detect) an optimal light center corresponding to the camera mounted in the vehicle based on topology information detected based on representative feature point representing shape features of a particular pattern included in input images.

According to an embodiment of the present disclosure, the particular pattern may be a check pattern including a plurality of quadrangles, and adjacent quadrangles have different colors.

Also, shape features of the particular pattern may represent a property of the shape of the particular pattern. For example, when the particular pattern is a check pattern, the shape feature may be a feature for identifying a quadrangular shape included in the check pattern.

Thus, in this case, the representative feature point may be a feature point (pixel or position) on the input image for identifying the quadrangular shape.

The topology information may have a general meaning used in the art. For example, the topology information may mean information about corner points of the particular pattern. In detail, the topology information may be information about geographical position (or pixel coordinates) regarding the corner point on the input image.

Here, the camera mounted in the vehicle may be a plurality of cameras (multi-camera), and thus, the input image may be a plurality of images. For example, the input images may include at least one of a front image, a rear image, a leftward image, and a rightward image of the vehicle.

According to an embodiment disclosed in the present disclosure, the input images may include a particular pattern.

The representative feature point may be a representative pixel of feature points corresponding to the particular pattern.

The feature points corresponding to the particular pattern may be selected (or determined) according to various methods. For example, when the particular pattern has a polygonal shape, the feature points may refer to candidate pixels having a possibility that they correspond to corners of the polygonal shape. Thus, pixels corresponding to spots (or pixel positions) in which pixel values are rapidly changed in the input images may be the feature points. In addition, it is obvious for a skilled person in the art that the feature points may be selected according to various methods.

Also, the representative feature point may be detected based on the feature points, and may be a pixel that may correspond to the corner (or that may have a maximum possibility that it corresponds to the corner).

The topology information may be information about corner points corresponding to the particular pattern included in the input image. Here, the corner points may be pixels corresponding to corners of the particular pattern.

According to an embodiment, the information about the corner points corresponding to the particular pattern may include at least one of pixel coordinates regarding the corner points and index information.

The topology information may be generated (or detected) in various forms. For example, when the particular pattern included in the input images is a check pattern, the topology information may be information in which pixel coordinates regarding corner points of the plurality of quadrangles included in the check pattern are stored in a matrix form. For example, when the check pattern includes a total of nine quadrangles comprised of three quadrangles horizontally (or in a row) and three quadrangles vertically (or in a column), the topology information may be expressed to have 4x4 matrix including pixel coordinate information corresponding to corners of nine quadrangles.

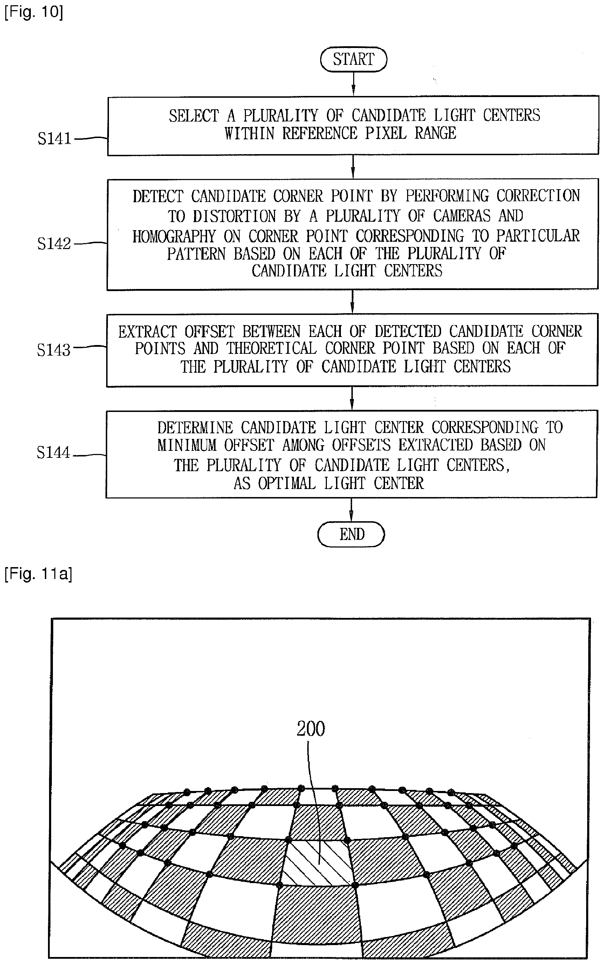

In this case, the topology information may further include information about corner points corresponding to reference quadrangle among the nine quadrangles. The corner points regarding the reference quadrangle may be used for determining an optimal light center corresponding to the camera mounted in the vehicle. This will be described later with reference to FIGS. 10 through 13.

Also, according to an embodiment disclosed in the present disclosure, the controller 110 may extract a two-dimensional (2D) gradient value with respect to pixel values of respective pixels included in the input image. When the 2D gradient value is equal to or greater than a reference gradient value, the controller 110 may detect corresponding pixels as feature points corresponding to the input images, and detect the representative feature point based on the detected feature points.

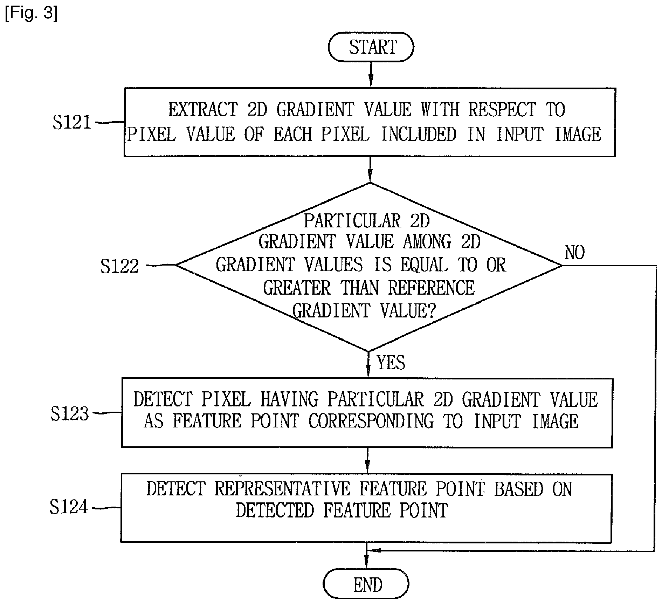

In the image processing device according to an embodiment disclosed in the present disclosure, the method for selecting (or detecting) the feature points and the representative feature point will be described later with reference to FIGS. 3 through 6.

Also, according to an embodiment disclosed in the present disclosure, when the input images include a check pattern and the detected representative feature point is a plurality of points, the controller 110 may detect four reference corner points corresponding to the respective corners of the reference quadrangle included in the check pattern based on the plurality of representative feature points, and detect the topology information based on the four reference corner points.

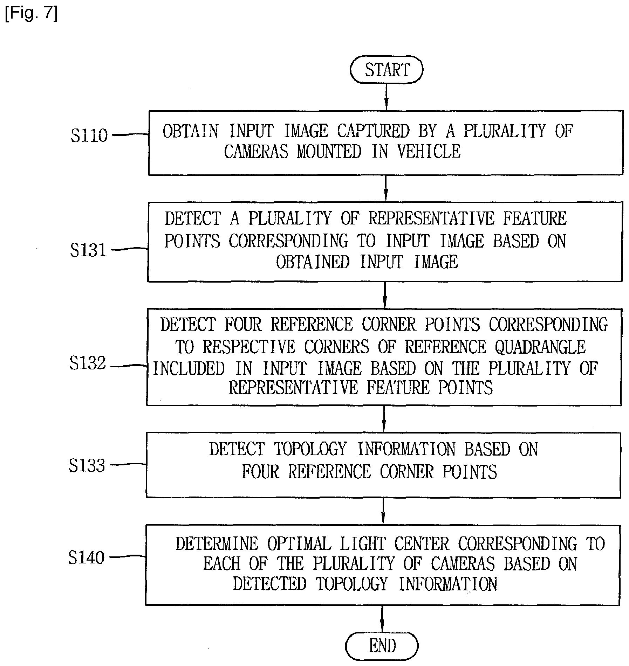

In the image processing device according to an embodiment disclosed in the present disclosure, the method for detecting the topology information will be described later with reference to FIGS. 7 through 9.

Also, according to an embodiment disclosed in the present disclosure, when the topology information is information about a corner point corresponding to a particular pattern included in the input images, the controller 110 may select a plurality of candidate light centers within a reference pixel range, detect a candidate corner point by performing correction to distortion generated by the plurality of cameras and homography with respect to a corner point corresponding to the particular pattern based on each of the plurality of candidate light centers, extract an offset between each candidate corner point detected based on each of the plurality of candidate light centers and a theoretical corner point, and determine a candidate light center corresponding to a minimum offset among offsets extracted based on the plurality of candidate light centers, as an optimal light center.

In the image processing device according to an embodiment disclosed in the present disclosure, the method for determining the optimal light center will be described in detail later with reference to FIGS. 10 through 13.

Also, according to an embodiment disclosed in the present disclosure, when the input images include a front image, a rear image, a leftward image and a rightward image of the vehicle, the controller 110 may perform correction to distortion generated by the plurality of cameras and homography with respect to each of the front image, the rear image, the leftward image and the rightward image of the vehicle based on the optimal light center, and match the front image, the rear image, the leftward image and the rightward image of the vehicle based on the result of performing the correction to distortion and homography to generate a top-view image with respect to the vehicle.

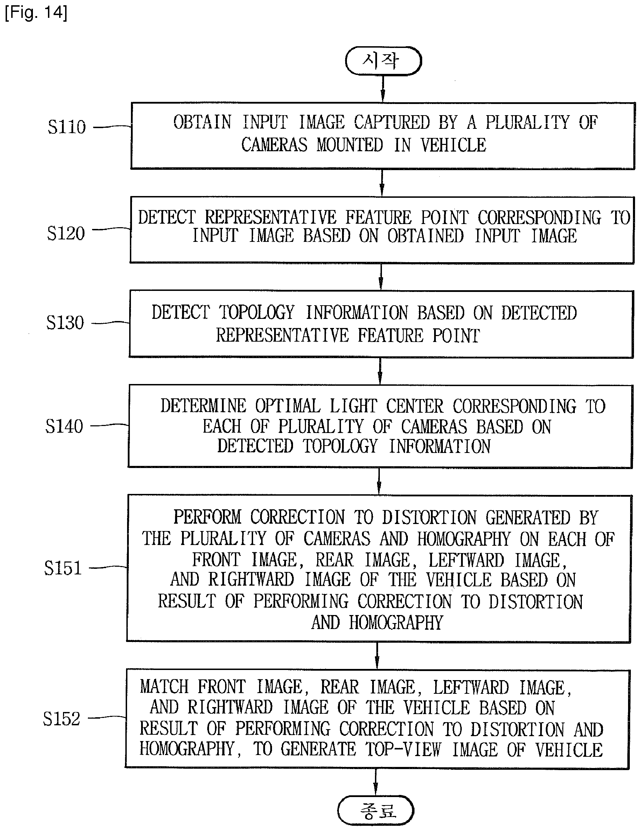

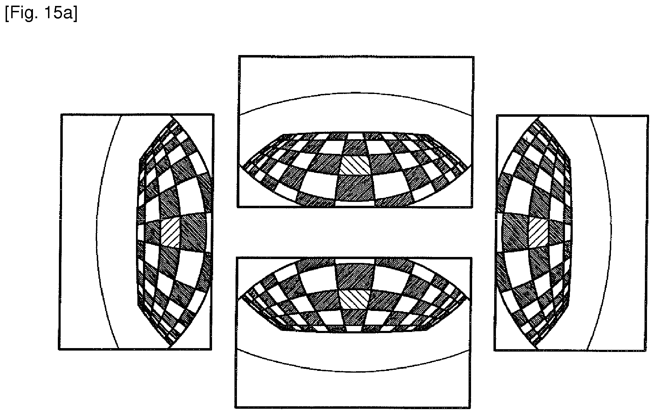

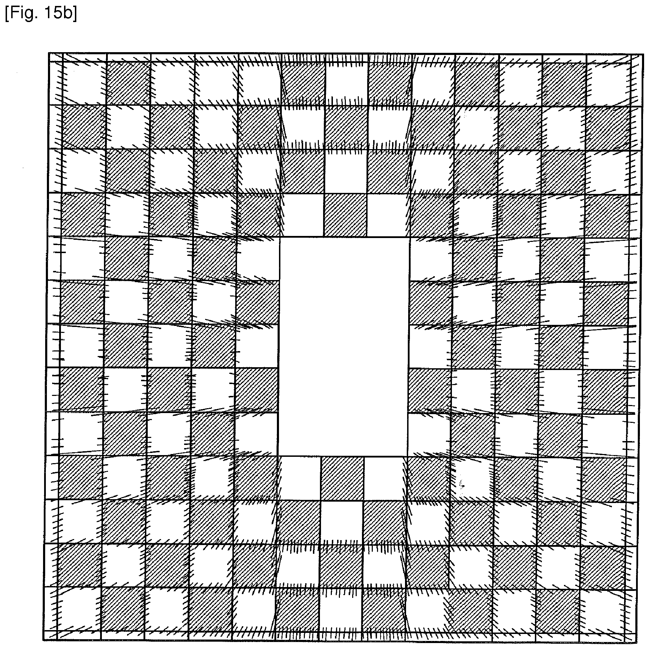

In the image processing device according to an embodiment disclosed in the present disclosure, the method for generating the top-view image will be described in detail later with reference to FIGS. 14 and 15.

The image obtaining unit 120 may include a plurality of images, and the plurality of images may be images obtained from a plurality of wide angle cameras mounted in the vehicle.

The plurality of wide angle cameras may include first to fourth wide angle cameras. The input images may be images including a particular pattern captured in advance through four wide angle cameras mounted in the vehicle. For example, the particular pattern may be a check pattern.

The first wide angle camera may be fixedly installed at the center of a front bumper of the vehicle or at the center of a front radiator grille to capture a front image of the vehicle. Also, the second wide angle camera may be fixedly installed at the center of a rear bumper of the vehicle or at the center of a trunk lid to capture a rear image of the vehicle. Also, the third wide angle camera may be fixedly installed at the center or a lower portion of a left side mirror to capture a left image of the vehicle. The fourth wide angle camera may be fixedly installed at the center or a lower end portion of a right side mirror of the vehicle to capture a right image of the vehicle. Here, referring to the installation positions of the first to fourth cameras, the first to fourth cameras may be installed at various positions by a designer.

The image obtaining unit 120 may obtain images corresponding to four directions of the vehicle (for example, a front image, a rear image, a leftward image, a rightward image of the vehicle) from the plurality of cameras (or multi-camera).

The image obtaining unit 120 may obtain the input images according to various methods.

According to an embodiment of the present disclosure, the image obtaining unit 120 may include a communication module for obtaining the input image.

The communication module may include a communication protocol for connecting the plurality of cameras and the image obtaining unit 120 by wireline or wirelessly.

The communication protocol that can be applied to the communication module is as follows.

First, as a protocol related to short-range communication, Bluetooth, radio frequency identification (RFID), infrared data association (IrDA), ultra-wide band (UWB), ZigBee, wireless LAN (Bluetooth, 802.11n, etc. protocol), or the like, may be used.

Also, as a wireless Internet technique, a wireless LAN, Wi-Fi, Wibro (wireless broadband), Wimax (World Interoperability for Microwave Access), HSDPA (High Speed Downlink Packet Access), or the like, may be used.

Also, as a protocol or interface related to wired communication, there maybe a USB (Universal Serial Bus) port, a HDMI (High-Definition Multimedia Interface) port, a DP (Display Port), a wired/wireless headset port, an external charger port, a wired/ wireless data port, a memory card port, a port for connecting a device having an identification module, an audio input/output (I/O) port, a video I/O port, an earphone port, or the like.

According to another embodiment of the present disclosure, the image obtaining unit 120 may include a plurality of cameras, and directly obtain the input images through the plurality of cameras.

In addition, it is obvious to a person skilled in the art that the image obtaining unit 120 may obtain the input images according to various methods.

The display unit 130 may display (or output) information processed in the image processing device 100. The information may be displayed or output on a particular screen.

For example the display unit 130 may function to display an image obtained from the camera mounted in the vehicle or an image processing result with respect to the obtained image.

Also, when the image processing device 100 performs a particular function, the display unit 130 may display a UI (User Interface) or a GUI (Graphic User Interface) related to the particular function.

The display unit 130 may include at least one of a Liquid Crystal Display (LCD), a Thin Film Transistor-LCD (TFT-LCD), an Organic Light Emitting Diode (OLED) display, a flexible display, a three-dimensional (3D) display, an e-ink display, or the like.

Some of the displays may be configured to be transparent or light-transmissive to allow viewing of the exterior, which may be called transparent displays. A typical transparent display may be, for example, a TOLED (Transparent Organic Light Emitting Diode) display, or the like. A rear structure of the display unit 130 may also be configured as a light-transmissive structure. Through such configuration, the user can view an object positioned at the rear side of a terminal body through the region occupied by the display unit 130 of the terminal body.

Various kinds of information may be displayed in the display unit 130. The information may be displayed in the form of a character, number, symbol, graphic, icon, or the like, and may be implemented as a 3D stereoscopic image.

The display unit 130 may be operated as the entire area or may be operated by being divided into a plurality of regions. In the latter case, the plurality of regions may be configured to operate in relation to one another.

For example, output or input windows may be displayed at upper and lower portions of the display unit 130, respectively. Each of the input and output windows may be a region assigned for the output or input of information. Soft keys on which numbers for inputting a telephone number, etc. are displayed may be output to the input window. When a soft key is touched, a number, or the like, corresponding to the touched soft key may be displayed on the output window. When a manipulating unit is manipulated, a connection of a call to a telephone number displayed on the output window may be attempted, or text displayed on the output window may be input to an application.

The display unit 130 may be configured to receive a touch input by scrolling the display unit 130. The user may move a cursor or pointer positioned on an entity, e.g., an icon, etc. displayed on the display unit 130 by scrolling the display unit 130. Further, when a user's finger is moved on the display unit 130, the path along which the user's finger is moved may be visually displayed on the display unit 130. This may be useful in editing images displayed on the display unit 130.

The display unit 130 may include a touch screen. For example, one function of the image processing device 100 may be performed, corresponding to a case in which the touch screen of the display unit 130 is touched together with the display unit 130 within a certain range of time. The case in which the touch screen is touched together with the display unit in addition to the case may include a case in which the user clamps the body of the image processing device 100 using user's thumb and forefinger. The one function may be, for example, activation or deactivation for the display unit 130.

The memory unit 140 may function to store information processed in the image processing device 100.

For example, the memory unit 140 may store various kinds of information such as the obtained input image, an image processing procedure and an image processing result with respect to the obtained image, and the like.

Also, the memory unit 140 may store various UIs and/or GUIs related to functions performed by the image processing device 100.

Also, the memory unit 140 may store data and programs necessary for the operation of the image processing device 100.

Also, the memory unit 140 may include a storage medium of at least one of a flash memory type, a hard disk type, a multimedia card micro type, a card type memory (e.g., an SD or XD memory, etc.), a random access memory (RAM), a static random access memory (SRAM), a read-only memory (ROM), an electrically erasable programmable read-only memory (EEPROM), a programmable read-only memory (PROM), and a solid-state drive (SSD). Also, the image processing device 100 may operate a web storage performing a storage function of the memory unit 140 on the Internet or may operate in relation to the web storage.

### Description of image processing method according to embodiments disclosed in the present disclosure

An image processing method according to embodiments disclosed in the present disclosure may include obtaining input images captured by a plurality of cameras mounted in a vehicle, detecting a representative feature point representing shape features of a particular pattern included in the input images, detecting topology information with respect to a corner point of the particular pattern based on the detected representative feature point, and determining an optimal light center corresponding to each of the plurality of cameras based on the detected topology information.

FIG. 2 is a flow chart illustrating an image processing method according to embodiments disclosed in the present disclosure.

With reference to FIG. 2, the image processing method according to embodiments disclosed in the present disclosure may include the following steps.

First, the image processing device according to an embodiment disclosed in the present disclosure may obtain input images captured by a plurality of cameras mounted in a vehicle (S110).

Next, the image processing device may detect a representative feature point corresponding to the input images based on the obtained input images (S120).

And then, the image processing device may detect topology information based on the detected representative feature point (S130).

And then, the image processing device may determine an optimal light center corresponding to each of the plurality of cameras based on the detected topology information (S140).

According to an embodiment disclosed in the present disclosure, the input images may include at least one of a front image, a rear image, a leftward image, and a rightward image of the vehicle.

According to an embodiment disclosed in the present disclosure, the detecting of the representative feature point may include extracting a 2D gradient value with respect to a pixel value of each pixel included in the input images, detecting a pixel having a particular 2D gradient value as a feature point corresponding to the input images when the particular 2D gradient value among the 2D gradient values is equal to or greater than a reference gradient value, and detecting the representative feature point based on the detected feature point.

Here, the topology information may be information about a corner point corresponding to a particular pattern included in the input image.

Also, according to an embodiment of the present invention, the input images may include a check pattern, and the detected representative feature point is a plurality of points. The detecting of the topology information may include detecting four reference corner points corresponding to respective corners of a reference quadrangle included in the check pattern based on the plurality of representative feature points; and detecting the topology information based on the four reference corner points.

Also, according to an embodiment of the present invention, the determining of the optimal light center may include selecting a plurality of candidate light centers within a reference pixel range, detecting a candidate corner point by performing correction to distortion generated by the plurality of cameras and homography on the corner point based on each of the plurality of candidate light centers, extracting an offset between each of the candidate corner points detected based on each of the plurality of candidate light centers and a theoretical corner point, and determining a candidate light center corresponding to a minimum offset among offsets extracted based on each of the plurality of candidate light centers, as an optimal light center.

Also, according to an embodiment of the present invention, the input images may include a front image, a rear image, a leftward image, and a rightward image of the vehicle, and the image processing method according to an embodiment of the present invention may further include performing correction to distortion generated by the plurality of cameras and homography on each of the front image, the rear image, the leftward image, and the rightward image of the vehicle and homography based on the optimal light center, and matching the front image, the rear image, the leftward image, and the rightward image of the vehicle based on the result of the performing of the correction for the distortion and homography to generate a top-view image with respect to the vehicle.

### First embodiment - Method for detecting representative point with respect to input image

A first embodiment disclosed in the present disclosure may be implemented by a portion or combination of the components or steps included in the foregoing embodiments or may be implemented by a combination of the embodiments. Hereinafter, repeated portions may be omitted for clarity of the first embodiment of the present disclosure.

An image processing device according to the first embodiment disclosed in the present disclosure may include an image obtaining unit for obtaining input images captured by a plurality of cameras mounted in a vehicle, and a controller for detecting a representative feature point representing a shape feature of a particular pattern included in the input images, detecting topology information with respect to corner points of the particular pattern based on the detected representative feature point, and determining an optimal light center corresponding to each of the plurality of cameras based on the detected topology information.

Also, according to the first embodiment of the present invention, the controller may extract a two-dimensional (2D) gradient value with respect to pixel values of respective pixels included in the input image. When the 2D gradient value is equal to or greater than a reference gradient value, the controller 110 may detect corresponding pixels as feature points corresponding to the input image, and detect the representative feature point based on the detected feature points.

FIG. 3 is a flow chart illustrating an image processing method for an image processing device according to a first embodiment disclosed in the present disclosure.

With reference to FIG. 3, the image processing method of the image processing device according to the first embodiment disclosed in the present invention may include the following steps.

First, the image processing device according to the first embodiment of the present invention may extract a 2D gradient value with respect to a pixel value of each pixel included in the input images obtained from the image obtaining unit (S121).

Next, the image processing device may determine whether a particular gradient value among the 2D gradient values is equal to or greater than a reference gradient value (S122).

Next, the image processing device may detect a pixel having the particular 2D gradient value, as a feature point corresponding to the input images (S123).

Next, the image processing device may detect the representative point based on the detected feature point (S124).

Here, the input images may include at least one of a front image, a rear image, a leftward image, and a rightward image of the vehicle.

Also, the input images may include a particular pattern. For example, the particular pattern may be a check pattern including a plurality of quadrangles, and adjacent quadrangles may have different colors.

In detail, the representative feature point may refer to a pixel (or a position or spot on a screen) that may correspond to a corner (or that may have a maximum possibility that it corresponds to the corner) included in the input mage.

According to the first embodiment of the present invention, the representative feature point may be detected (or determined) based on a plurality of feature points corresponding to the particular pattern.

When the particular pattern has a quadrangular shape, the plurality of feature points may refer to candidate pixels having a possibility that they corresponding to corners included in the quadrangle.

The plurality of feature points may be detected according to various methods. For example, the plurality of feature points may be pixels having a possibility that they correspond to the corners of the quadrangle, so the plurality of feature points may be detected by detecting a rapid change of pixel values in the boundary of the quadrangle. That is, pixels corresponding to the spots (or pixel positions) where the pixel values are rapidly changed in the input image.

The spots where the pixel values are rapidly changed may be extracted according to various methods. For example, the spots where the pixel values are rapidly changed may be determined by calculating a 2D gradient value with respect to the pixel values. Here, the 2D gradient value may be calculated according to a general method used in the art. For example, a Harris Corner detection method uses a method for detecting feature points of an arbitrary pattern based on the 2D gradient value.

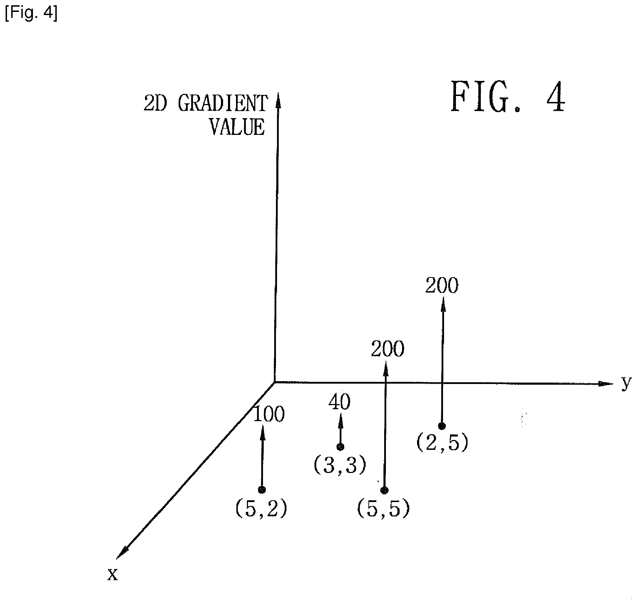

FIG. 4 is a view showing a method of detecting a plurality of feature points according to a first embodiment disclosed in the present disclosure.

With reference to FIG. 4, the image processing device may calculate a 2D gradient value with respect to a pixel value of each pixel included in the input image.

For example, a 2D gradient value of a first point corresponding to pixel coordinates (5,2) may be 100, a 2D gradient value of a second point corresponding to pixel coordinates (3,3) may be 40, a 2D gradient value of a third point corresponding to pixel coordinates (5,5) may be 200, and a 2D gradient value of a fourth point corresponding to pixel coordinates (2,5) may be 200.

In this case, when a predetermined reference gradient value is 150, the image processing device may determine the third point and the fourth point greater than the reference gradient value among the 2D gradient values, as feature points corresponding to the input image.

According to the first embodiment of the present invention, the image processing device may determine feature points existing within a particular region of the input images among the plurality of feature points, as candidate feature points.

Also, the image processing device may detect a pixel corresponding to average coordinates of the candidate feature points, as the representative feature point.

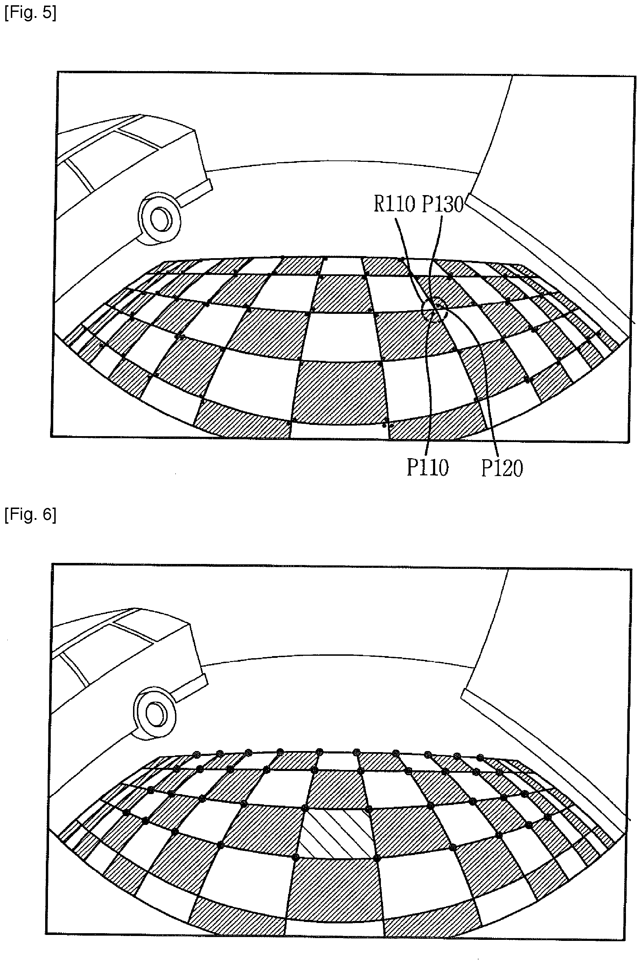

FIG. 5 is an exemplary view showing a method for detecting a representative feature point according to the first embodiment disclosed in the present disclosure.

With reference to FIG. 5, the image processing device calculates a 2D gradient value with respect to a pixel value of each pixel included in the input images, and when a particular gradient value among the 2D gradient values is equal to or greater than the reference gradient value, the image processing device may detect (or determine) a pixel corresponding to the particular gradient value, as a feature point.

Also, the image processing device may determine feature points existing within a particular region R110 of the input images among the plurality of feature points, as candidate feature points P110 and P120.

Also, the image processing device may detect a pixel P210 corresponding to average coordinates of the candidate feature points P110 and P120, as the representative feature point.

The average coordinates of the candidate feature points P110 and P120 may be pixel coordinates corresponding to an average pixel distance of the candidate feature points from the particular pixel of the input image.

Here, the particular region R110 may be a region in which pixels within a reference pixel distance range from the particular pixel of the input images are positioned. For example, the reference pixel distance range may have a radius of 5 pixels based on the particular pixel.

The particular pixel may be determined according to various methods. For example, the particular pixel may be a pixel corresponding to one of corners of a particular quadrangle. In the case of FIG. 5, the particular pixel may be a pixel corresponding to a corner of the quadrangle of which a portion is included in the particular region R110.

FIG. 6 is an exemplary view showing the result of a method for detecting a representative feature point according to the first embodiment disclosed in the present disclosure.

With reference to FIG. 6, representative feature points detected according to the method for detecting a representative feature point according to the first embodiment of the present invention can be confirmed.

In this case, a representative feature point corresponding to each of the corners of the quadrangles included in the check pattern illustrated in FIG. 6 is determined.

### Second embodiment - Method for detecting topology information

A second embodiment disclosed in the present disclosure may be implemented by a portion or combination of the components or steps included in the foregoing embodiments or may be implemented by a combination of the embodiments. Hereinafter, repeated portions may be omitted for clarity of the second embodiment of the present disclosure.

An image processing device according to the second embodiment disclosed in the present disclosure may include an image obtaining unit for obtaining input images captured by a plurality of cameras mounted in a vehicle, and a controller for detecting a representative feature point representing a shape feature of a particular pattern included in the input images, detecting topology information with respect to corner points of the particular pattern based on the detected representative feature point, and determining an optimal light center corresponding to each of the plurality of cameras based on the detected topology information.

Also, according to the second embodiment of the present invention, the input images may include a check pattern, and the detected representative feature point is a plurality of points. The controller may detect four reference corner points corresponding to respective corners of a reference quadrangle included in the check pattern, and detect the topology information based on the four reference corner points.

Also, according to the second embodiment of the present invention, the topology information may be information about a corner point corresponding to a particular pattern included in the input image.

Also, according to the second embodiment of the present invention, information about the corner point corresponding to the particular pattern may include at least one of pixel coordinates an index information regarding the corner point.

Also according to the second embodiment of the present invention, the particular pattern may be a check pattern, and the corner point may be a pixel corresponding to each of the corners of the quadrangle included in the check pattern.

FIG. 7 is a flow chart illustrating an image processing method for an image processing device according to the second embodiment disclosed in the present disclosure.

With reference to FIG. 7, the image processing method of the image processing device according to the second embodiment disclosed in the present invention may include the following steps.

First, the image processing device may obtain input images captured by a plurality of cameras mounted in a vehicle (S110).

Next, the image processing device may detect a plurality of representative feature points corresponding to the input images based on the obtained input images (S131).

Next, the image processing device may detect four reference corner points corresponding to respective corners of a reference quadrangular included in the input images based on the plurality of representative feature points (S132).

Next, the image processing device may detect topology information based on the four reference corner points (S133).

Next, the image processing device may determine an optimal light center corresponding to each of the plurality of cameras based on the detected topology information (S140).

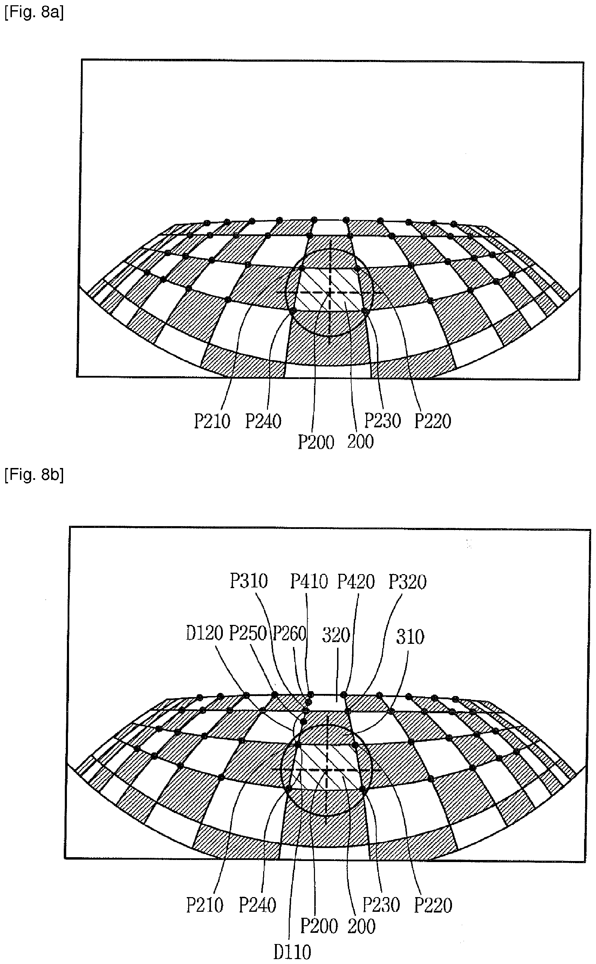

FIGS. 8A to 8D are exemplary views showing a method for detecting topology information according to the second embodiment disclosed in the present disclosure.

With reference to FIG. 8A, the image processing device may detect four reference corners P210, P220, P230, and P240 based on a reference quadrangle 200 among a plurality of quadrangles included in a check pattern included in the input image.

The reference quadrangle may be selected (or determined) according to various references. For example, a quadrangle having a particular color (or a particular color pattern) among the plurality of quadrangles included in the check pattern may be selected as a reference quadrangle. The quadrangle having a particular color may be previously determined by a user. Also, for example, a quadrangle having minimum distortion generated by cameras among the plurality of quadrangles, as a reference quadrangle. This may be a more effective (or more accurate) detecting method because four reference corner points are detected based on a quadrangle having minimum distortion and topology information is detected based on the four reference corner points.

The four reference corner points P210, P220, P230, P240 may be detected according to the following method.

First, the image processing device 100 may detect a pixel corresponding to average coordinates of pixels included in the reference quadrangle 200, as a center pixel P200.

Next, the image processing device 100 may detect four representative feature points closest to the center pixel P200 among representative feature points (points positioned at corners of quadrangles illustrated in FIG. 8A) existing in each of quadrants based on a vertical axis and a horizontal axis including the center pixel P200, as the reference corner points P210, P220, P230, P240.

According to the second embodiment, the image processing device 100 may detect corner points corresponding to respective corners of the quadrangles included in the check pattern based on the four detected reference corner points P210, P220, P230, P240.

Also, the image processing device 100 may detect the topology information based on the corner points corresponding to respective corners of the quadrangles.

Here, the topology information may include at least one of pixel coordinates and index information with respect to the corner points corresponding to the respective corners of the quadrangles.

Also, the topology information may be generated (or detected) to have various forms. For example, the topology information may be information in which pixel coordinates with respect to corner points of the plurality of quadrangles included in the check pattern are stored in a matrix form. For example, when the check pattern includes a total of nine quadrangles comprised of three quadrangles horizontally (or in a row) and three quadrangles vertically (or in a column), the topology information may be expressed to have 4x4 matrix including pixel coordinate information corresponding to corners of nine quadrangles.

In this case, the topology information may further include information about corner points corresponding to reference quadrangle among the nine quadrangles. The corner points regarding the reference quadrangle may be used for determining an optimal light center corresponding to the camera mounted in the vehicle.

According to the second embodiment of the present invention, the image processing device 100 may detect corner points corresponding to respective corners of the quadrangles included in the check pattern based on the four reference corner points P210, P220, P230, P240.

In detail, the image processing device 100 may extract a first reference distance between two reference corner points adjacent in a particular direction among the reference corner points P210, P220, P230, P240.

Also, the image processing device 100 may detect a representative feature point closest to a position obtained by multiplying the first reference distance by a particular rate in the particular direction, as a corner point of a first quadrangle adjacent to the reference quadrangle.

Here, the particular direction may be a horizontal direction or a vertical direction, and the particular rate may be 2/3.

Also, the image processing device 100 may extract a second reference distance between two corner points adjacent in the particular direction among the corner points of the first quadrangle and detect a representative feature point closest to a position obtained by multiplying the second reference distance by a particular rate in the particular direction, as a corner point of the second quadrangle adjacent to the first quadrangle.

The image processing device 100 may detect corner points of each of the quadrangles included in the check pattern by repeatedly performing the method as described above.

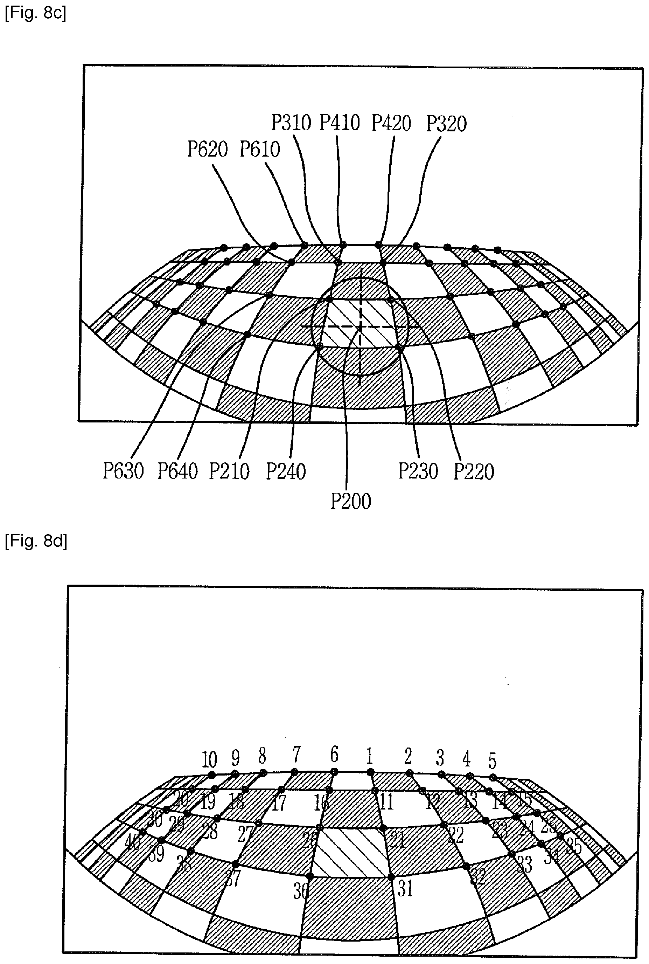

FIG. 8B and 8C are exemplary views showing a method for detecting corner points of each quadrangle included in the check pattern based on the reference corner points.

First, with reference to FIG. 8B, as described above, when the reference quadrangle 200 including a particular color pattern is selected from among a plurality of quadrangles included in the check pattern and the four reference corner points P210, P220, P230, P240 corresponding to the reference quadrangle 200 are determined, the image processing device 100 may extract a first reference distance d110 between two reference corner points P210 and P240 adjacent in the vertical direction among the reference corner points P210, P220, P230, P240.

Also, the image processing device 100 may detect a representative feature point closest to a position P250 obtained by multiplying the first reference distance d110 by a particular rate (e.g., 2/3) in the vertical direction, as a corner point P30 of the first quadrangle 310 adjacent to the reference quadrangle 200.

According to the above method, the image processing device 100 may detect a different corner point P320 of the first quadrangle 310 based on the two different reference corner points P220 and P230 adjacent in the vertical direction.

Also, the image processing device 100 may extract a second reference distance d120 between two corner points P310 and P210 adjacent in the vertical direction among the corner points P310, P320, P210, P220 of the first quadrangle 310, and detect a representative feature point closest to a position P260 obtained by multiplying the second reference distance d120 by a particular rate (e.g., 2/3) in the vertical direction, as a corner point P410 of the second quadrangle 320 adjacent too the first quadrangle 310.

According to the above method, the image processing device 100 may detect a different corner point P320 of the second quadrangle 420 based on the two different reference corner points P320 and P220 adjacent in the vertical direction.

With reference to FIG. 8C, the image processing device 100 may detect corner points of quadrangles adjacent in the horizontal direction to the reference quadrangle 200 according to a method similar to the aforementioned method in FIG. 8B, and also, the image processing device 100 may detect corner points of quadrangles included in the check pattern by repeatedly performing the aforementioned method.

That is, the image processing device 100 may extract a distance between two reference points P210 and P220 adjacent in the horizontal direction among the reference corner points P210, P220, P230, P240, and detect a representative feature point closest to a position obtained by multiplying the distance by a particular rate in the horizontal direction, as a corner point P630 of a quadrangle adjacent to the reference quadrangle 200 in the horizontal direction.

Also, according to the aforementioned method, the image processing device 100 may detect a different corner point P640 of the quadrangle adjacent to the reference quadrangle 200 in the horizontal direction based on the two different reference corner points P230 and P240 adjacent in the horizontal direction among the reference corner points P210, P220, P230, P240.

Also, according to the aforementioned method, the image processing device 100 may detect corner points P610 and P620 of quadrangles adjacent to the first quadrangle 310 and the second quadrangle 320 in the horizontal direction based on the corner points P210, P220, P310, P320, P410, and P420 of the first quadrangle 310 and the second quadrangle 320.

Also, the image processing device 100 may detect corner points of other quadrangles included in the check pattern by repeating the aforementioned method.

According to the second embodiment, the image processing device 100 may generate (or detect) the topology information based on the corner points detected according to the aforementioned method.

As described above, the topology information may include at least one of pixel coordinates and index information with respect to the detected corner points.

With reference to FIG. 8D, the image processing device 100 may add index information to the detected corner points in order to generate the topology information.

The index information may refer to order of the corner points, and from the index information, which corners of quadrangles included in the input images the respective corner points correspond to can be confirmed.

The image processing device 100 may generate pixel coordinate information of the corner points, as topology information in a matrix form, and the topology information may include index information together.

Also, the topology information may include information about the reference corner points corresponding to the reference quadrangle for determining an optimal light center with respect to the cameras mounted in the vehicle.

### Third embodiment - method for detecting corner point through convolution calculation

A third embodiment disclosed in the present disclosure may be implemented by a portion or combination of the components or steps included in the foregoing embodiments or may be implemented by a combination of the embodiments. Hereinafter, repeated portions may be omitted for clarity of the third embodiment of the present disclosure.

According to the third embodiment, the image processing device 100 may detect corner points corresponding to quadrangles included in the input images through calculation of convolution between the input image and a mask image having a template pattern.

The meaning of the convolution calculation may be interpreted as a general meaning used in the art.

According to the third embodiment of the present invention, the template pattern may be a sub-check pattern corresponding to a portion of the check pattern.

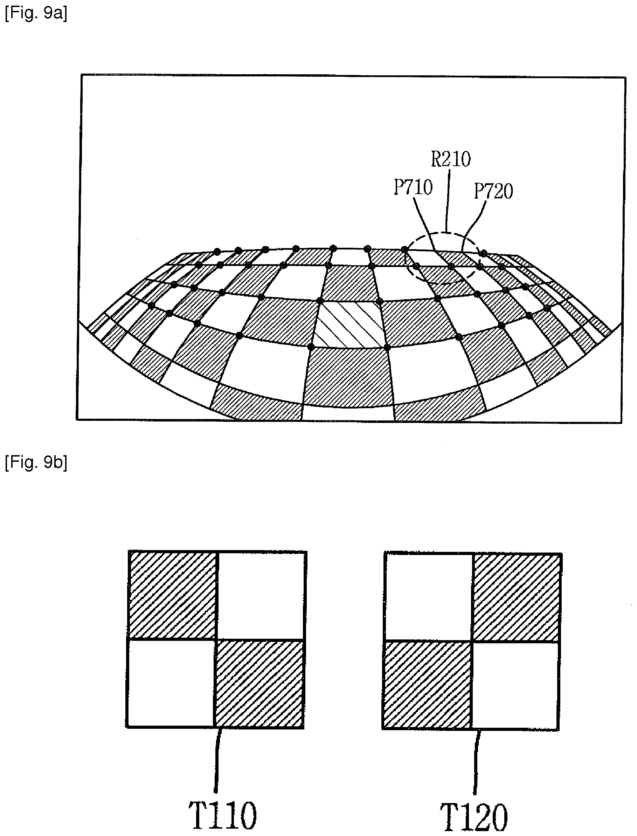

FIGS. 9a and 9b are exemplary views showing a method for detecting a corner point using convolution according to the second embodiment disclosed in the present disclosure.

FIG. 9a shows a case in which the image processing device 100 detects corner points corresponding to a quadrangle included in a particular region R210 of the input image through the method for detecting a corner point using convolution.

The image processing device 100 may perform convolution calculation with respect to a check pattern included in the particular region R210 based on a first mask image T110 having a first template pattern and a second mask image T120 having a second template pattern.

As shown in FIG. 9b, it can be seen that the first template pattern and the second template pattern may be a sub-check pattern corresponding to the particular region R210 among check patterns included in the input image.

When the check pattern included in the particular region R210 is determined to be similar to at least one of the first mask image T110 and the second mask image T120 based on the convolution calculation result, the image processing device 100 may detect a pixel corresponding to a corner point included in the similar mask region, as corner points P710 and P720 corresponding to a quadrangle included in the particular region R210. For example, in the case of FIGS. 9a and 9b, the second mask image T120 is similar to the check pattern included in the particular region R210.

### Fourth embodiment - method for determining optimal light center based on topology information

A fourth embodiment disclosed in the present disclosure may be implemented by a portion or combination of the components or steps included in the foregoing embodiments or may be implemented by a combination of the embodiments. Hereinafter, repeated portions may be omitted for clarity of the fourth embodiment of the present disclosure.

An image processing device 100 according to the fourth embodiment disclosed in the present disclosure may include an image obtaining unit for obtaining input images captured by a plurality of cameras mounted in a vehicle, and a controller for detecting a representative feature point representing a shape feature of a particular pattern included in the input images, detecting topology information with respect to corner points of the particular pattern based on the detected representative feature point, and determining an optimal light center corresponding to each of the plurality of cameras based on the detected topology information.

Also, according to the fourth embodiment, the controller selects a plurality of candidate light centers within a reference pixel range, detect candidate corner points by performing correction to distortion generated by the plurality of cameras and homography on the corner points corresponding to the particular pattern based on each of the plurality of candidate light centers, extract an offset between each of the candidate corner points detected based on each of the plurality of candidate light centers and a theoretical corner point, and determine a candidate light center corresponding to a minimum offset among offsets extracted based on the plurality of candidate light centers, as an optimal light center.

FIG. 10 is a flow chart illustrating a method for determining an optimal light center of the image processing device 100 according to a fourth embodiment disclosed in the present disclosure.

With reference to FIG. 10, the method for determining an optimal light center of the image processing device 100 according to the fourth embodiment disclosed in the present disclosure may include the following steps.

First, the image processing device 100 may select a plurality of candidate light centers within a reference pixel range (S141).

Next, the image processing device 100 may detect a candidate corner point by performing correction to distortion generated by the plurality of cameras and homography on the corner point corresponding to the corner point corresponding to the particular pattern based on each of the plurality of candidate light centers (S142).

Next, the image processing device 100 may extract an offset between each of the candidate corner points detected based on each of the plurality of candidate light centers and a theoretical corner point (S143).

Next, the image processing device 100 may determine a candidate light center corresponding to a minimum offset among the offsets extracted based on the plurality of candidate light centers, as an optimal light center (S144).

According to the fourth embodiment of the present invention, the image processing device 100 may select a plurality of candidate light centers within a reference pixel range.

The reference pixel range may be a range with 6 to 8 from a particular pixel included in the input image.

Also, the image processing device may detect a candidate corner point by performing correction to distortion generated by the plurality of cameras and homography on the corner point based on each of the plurality of candidate light centers.

Also, the image processing device may extract an offset between each of the candidate corner points detected based on each of the plurality of candidate light centers and a theoretical corner point, and determine a candidate light center corresponding to a minimum offset among the offsets extracted based on the plurality of candidate light centers, as an optimal light center.

The method for determining an optimal light center by the image processing device according to the fourth embodiment may be applied for each of the plurality of images (or the input image) captured by the plurality of cameras. In this case, an optimal light center corresponding to each of the plurality of cameras may be determined. For example, when the plurality of cameras are the first to fourth wide angle cameras as described above, four optimal light centers with respect to the plurality of cameras may be determined.

Hereinafter, a method for determining an optimal light center by performing distortion correction and homography on any one of images when the input images include a front image, a rear image, a leftward image, and a rightward image of the vehicle will be provided.

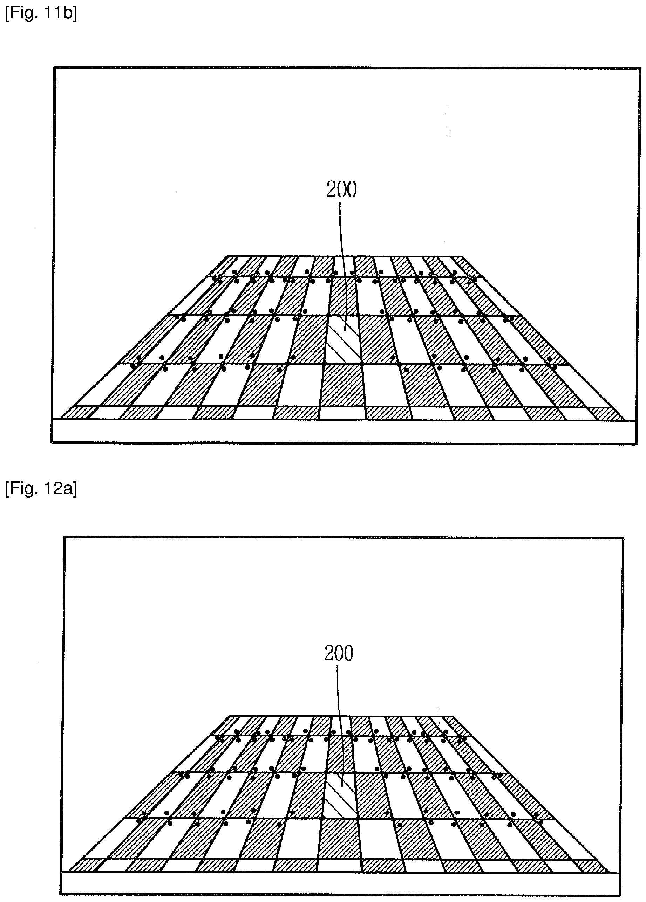

FIGS. 11 through 13 are exemplary views showing a method for determining an optimal light center of the image processing device disclosed in the present disclosure.

With reference to FIGS. 11a and 11b, the image processing device 100 may perform correction to distortion generated by a wide angle camera on the corner point based on topology information detected by the method disclosed in the embodiments as described above.

In detail, the image processing device 100 may select a plurality of candidate light centers with respect to a particular camera (e.g., the first wide angle camera) among the plurality of cameras within a reference pixel range based on a particular pixel.

The particular pixel may be a pixel included in an image captured by the particular camera among the input images.

The image processing device 100 may perform correction to distortion generated by the wide angle camera on the corner point based on each of the plurality of selected candidate light centers.

FIG. 11a shows a distorted input image captured by a wide angle camera that can secure a wide viewing angle.

FIG. 11b shows an image obtained by correcting distortion of the input image based on each of the plurality of candidate light centers by the image processing device 100.

By performing distortion correction as shown in FIG. 11b, the topology information may be converted, and thus, the correction to the distortion generated by the wide angle camera may be performed on the corner point.

Here, the quadrangle having a particular color pattern (slanted region) is a reference quadrangle 200, and a corner point included in the reference quadrangle 200 is a reference corner point.

Also, as shown in FIG. 11b, since distortion correction is performed on the corner points based on each of the plurality of candidate light centers, a plurality of corner points generated as the corner points have been converted may be generated in corner regions of the quadrangles included in the check pattern.

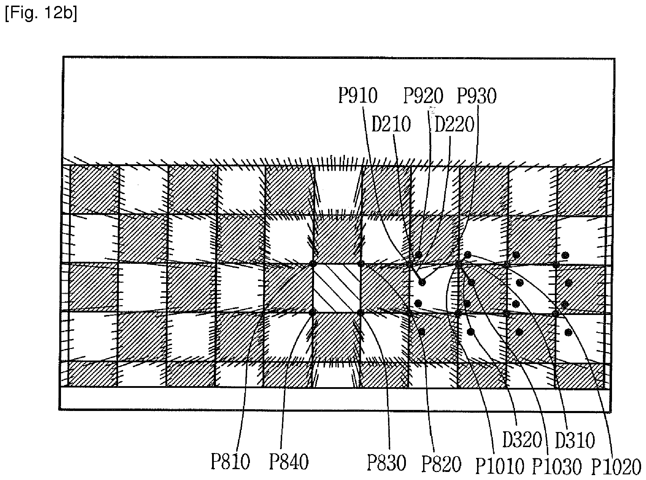

With reference to FIGS. 12a and 12b, the image processing device 100 may perform homography with respect to the distortion correction result (FIG. 12a) regarding the corner points.

As described above, the performing of the homograph may be a mathematical conversion between two images having different views. In this case, pixels included in an image may correspond to a different image based on a homography matrix representing the mathematical conversion relationship. The result obtained by performing homography is illustrated in FIG. 11b.

Here, the quadrangle having a particular color pattern (slanted region) illustrated in FIG. 12 is a reference quadrangle 200, and a corner point included in the reference quadrangle 200 is a reference point.

Also, as shown in FIG. 12b, since homography conversion is performed on the corner points based on each of the plurality of candidate light centers, a plurality of corner points (white points, e.g., P 920 and P930) generated as the corner points have been converted may be generated in corner regions of the quadrangle included in the check pattern. In FIG. 12b, the plurality of corner points are not shown in all the quadrangles included in the check pattern for the sake of convenience.

The image processing device 100 may detect a candidate corner point based on the distortion correction and homography conversion result performed as described above.

The candidate corner point may be a plurality of corner points (white points, e.g., P920 and P930) illustrated in FIG. 12b.

According to the fourth embodiment of the present invention, the image processing device 100 may extract an offset between each of the candidate corner points (white points) detected based on each of the plurality of candidate light centers and a theoretical corner point (black point, e.g., P 910).

The theoretical corner point may be determined according to various methods. According to the fourth embodiment, the image processing device 100 may detect a reference corner point corresponding to a reference pattern included in the particular pattern from the topology information based on the distortion correction and homography performing result. For example, the reference pattern may be a reference quadrangle 200 included in the check pattern. Also, for example, the reference corner point may be corner points P810 to P840 of the reference quadrangle illustrated in FIG. 12b.

Also, the image processing device 100 may detect theoretical corner points (black points, e.g., P910) corresponding to the particular pattern based on the reference corner points P810 to P840.

For example, with reference to FIG. 12b, the image processing device 100 may detect pixels disposed to be separated by a predetermined pixel distance in a particular direction based on the reference corner points P810 to P840, as a plurality of theoretical corner points (black points, e.g., P910) Here, the particular direction may be a horizontal direction or a vertical direction, and the predetermined pixel distance may be a pixel distance corresponding to a horizontal or vertical length of the reference quadrangle 200.

Offsets between the candidate corner points (white points) and the theoretical corner points (black points, e.g., P910) may be extracted according to various methods. Here, the offset may be a pixel distance between the candidate corner point detected based on one selected from among the plurality of candidate light centers and the theoretical corner point. For example, in the case of FIG. 12b, the offset may be a distance d210 between a first theoretical corner point P910 and a first candidate corner point P920and a distance d220 between the first theoretical corner point P910 and a second candidate corner point P930. Here, the first candidate corner point P920 may be detected by performing the distortion correction and homography conversion based on the first candidate light center, and the second candidate corner point P930 may be detected by performing the distortion correction and homography conversion based on the second candidate light center.

Also, according to the fourth embodiment of the present invention, the image processing device 100 may determine a candidate light center corresponding to a minimum offset among offsets extracted based on each of the plurality of candidate light centers, as an optimal light center. For example, in FIG. 12b, when d210 is smaller than d220, a candidate light center as a reference for conversion with respect to the first candidate corner point P920 may be determined (or detected) as an optimal light center. For example, the first candidate light center as a reference for conversion with respect to the first candidate corner point P920 may be determined as an optimal light center.

Also, in another fourth embodiment of the present invention, the image processing device 100 may extract the offset with respect to each of all the corner points corresponding to the particular pattern, extract an average offset of the extracted offsets, and determine a candidate light center corresponding to a minimum average offset among the average offsets extracted based on each of the plurality of candidate light centers, as an optimal light center.

For example, in the case of FIG. 12b, the image processing device 100 may generate the first candidate corner point P920 by performing distortion correction and homography conversion based on the first candidate light center, and generate a third candidate corner point P1020 by performing distortion correction and homography conversion based on the second candidate light center.

Also, the image processing device 100 may calculate the first offset d210 between the first theoretical corner point P910 and the first candidate corner point P920 and the second offset d310 between the second theoretical corner point P1010 and the third candidate corner point P1020.

Also, the image processing device 100 may calculate a first average offset by averaging the first offset d210 and the second offset d310.

Similarly, the image processing device 100 may calculate a third offset d220 between the first theoretical corner point P910 and the second candidate corner point P930, and calculate a fourth offset d320 between the second theoretical corner point P1010 and the fourth candidate corner point P1030.

Also, the image processing device 100 may calculate a second average offset by averaging the third offset d220 and the fourth offset d320.

In this case, when the first average offset is smaller than the second average offset, the image processing device 100 may determine (or detect) the first candidate light center as a reference for conversion with respect to the first offset, as an optimal light center.

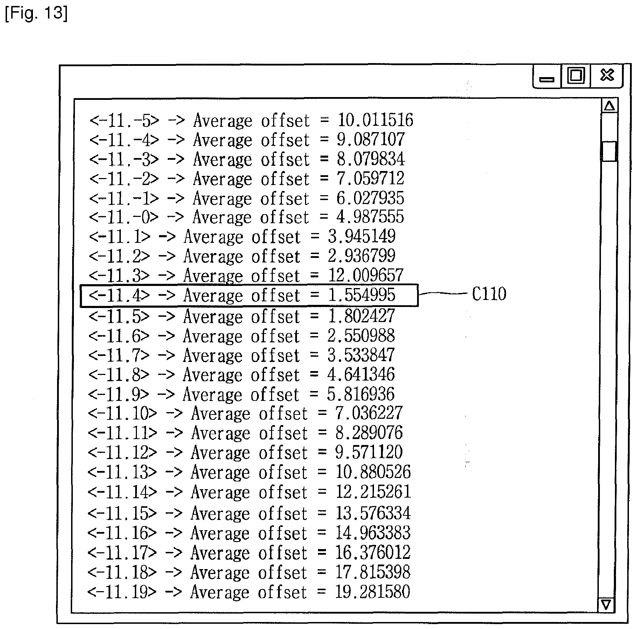

FIG. 13 is an exemplary view showing a method for determining an optimal light center of the image processing device according to the fourth embodiment disclosed in the present disclosure.

With reference to FIG. 13, since an average offset corresponding to <-11.4>, a candidate corner point converted based on a particular candidate light center, is '1.554995' and it corresponds to a minimum average offset among average offsets corresponding to other candidate corner points, so the image processing device 100 may determine the candidate light center as a reference for conversion of <-11.4>, as an optimal light center.

### Fifth embodiment - method for generating top-view image based on optimal light center

A fifth embodiment disclosed in the present disclosure may be implemented by a portion or combination of the components or steps included in the foregoing embodiments or may be implemented by a combination of the embodiments. Hereinafter, repeated portions may be omitted for clarity of the fifth embodiment of the present disclosure.

An image processing device according to the fifth embodiment disclosed in the present disclosure may include an image obtaining unit for obtaining input images captured by a plurality of cameras mounted in a vehicle, and a controller for detecting a representative feature point representing a shape feature of a particular pattern included in the input images, detecting topology information with respect to corner points of the particular pattern based on the detected representative feature point, and determining an optimal light center corresponding to each of the plurality of cameras based on the detected topology information.

Also, according to the fifth embodiment of the present invention, the input images may include a front image, a rear image, a leftward image and a rightward image of the vehicle, and the controller 110 may perform correction to distortion generated by the plurality of cameras and homography with respect to each of the front image, the rear image, the leftward image and the rightward image of the vehicle based on the optimal light center, and match the front image, the rear image, the leftward image and the rightward image of the vehicle based on the result of performing the correction to distortion and homography to generate a top-view image with respect to the vehicle.

FIG. 14 is a flow chart illustrating an image processing method of an image processing device according to a fifth embodiment disclosed in the present disclosure.

With reference to FIG. 14, the image processing method of the image processing device according to the fifth embodiment disclosed in the present invention may include the following steps.

First, the image processing device may obtain input images captured by a plurality of cameras mounted in a vehicle (S110). In this case, the input images may include at least one of a front image, a rear image, a leftward image, and a rightward image of the vehicle.

Next, the image processing device may detect a representative feature point corresponding to the input images based on the obtained input images (S120).

And then, the image processing device may detect topology information based on the detected representative feature point (S130).

And then, the image processing device may determine an optimal light center corresponding to each of the plurality of cameras based on the detected topology information (S140).

Next, the image processing device may perform correction to distortion generated by the plurality of cameras and homography on each of the front image, the rear image, the leftward image, and the rightward image of the vehicle based on the optimal light center (S151).

Next, the image processing device may generate a top-view image with respect to the vehicle by matching the front image, the rear image, the leftward image, and the rightward image of the vehicle based on the result obtained by performing the distortion correction and homography (S152).

FIGS. 15a ans 15b are exemplary views showing an image processing method of an image processing device according to the fifth embodiment disclosed in the present disclosure.

With reference to FIGS. 15a and 15b, the image processing device 100 may determine four optimal light centers based on the method disclosed in the embodiments described above with respect to each of the front image, the rear image, the leftward image, and the rightward image of the vehicle illustrated in FIG. 15a.

Also, the image processing device 100 may perform correction to distortion generated by a plurality of cameras and homography conversion on each of the front image, the rear image, the leftward image, and the rightward image of the vehicle based on the four optimal light centers, and match the converted four images to generate a top-view image with respect to the vehicle as shown in FIG. 15b.

According to the fifth embodiment of the present invention, the top-view image may be applied to an aroundview monitoring (AVM) system.

As described above, according to the image processing device and image processing method according to embodiments disclosed in the present disclosure, the image processing device and image processing method automatically performing calibration of a multi-camera system mounted in a vehicle are provided, so an optical time of a mass-production line for the vehicle can be shortened.

Although the present invention has been described with reference to the embodiments illustrated in the accompanying drawings, the embodiments are only illustrative. Those skilled in the art will appreciate that various modifications and other equivalent embodiments can be made based on the embodiments. Accordingly, the true technical scope of the present invention should be defined by the attached claims.

## Claims

1. An image processing device (100) comprising:
an image obtaining unit (120) that obtains input images captured by a plurality of cameras mounted in a vehicle; and
a controller (110) that determines an optimal light center corresponding to each of the plurality of cameras,
**characterized in that**:
the controller (110) detects topology information with respect to corner points of a check pattern included in the input images and determines the optimal light center based on the topology information,
wherein the topology information includes a plurality of representative feature points representing a shape feature of the particular pattern included in the input images,
wherein the controller (110) is further configured to:
detect four reference corner points (P210, P220, P230, P240) among the plurality of representative feature points, wherein the four reference corner points (P210, P220, P230, P240) are corresponding to respective corners of a reference quadrangle (200) included in the check pattern,
extract a first reference distance (D110) between two reference corner points (P210, P240) adjacent in a particular direction among the four reference corner points (P210, P220, P230, P240),
detect a representative feature point (P310) closest to a position (P250) obtained by multiplying the first reference distance (D110) by a particular rate in the particular direction, as a corner point of a first quadrangle (310) adjacent to the reference quadrangle (200),
extract a second reference distance between two reference corner points (P220, P230) adjacent in a particular direction among the four reference corner points (P210, P220, P230, P240),
detect a representative feature point (P320) closest to a position obtained by multiplying the second reference distance by a particular rate in the particular direction, as a corner point of the first quadrangle (310) adjacent to the reference quadrangle (200),
extract a third reference distance (D120) between two corner points (P210, P310) adjacent in a particular direction among the corner points (P210, P310, P220, P320) of the first quadrangle (310),
detect a representative feature point (P410) closest to a position (P260) obtained by multiplying the third reference distance (D120) by a particular rate in the particular direction, as a corner point of a second quadrangle (320),
extract a fourth reference distance between two corner points (P220, P320) adjacent in a particular direction among the corner points (P210, P310, P220, P320) of the first quadrangle (310), and
detect a representative feature point (P420) closest to a position obtained by multiplying the fourth reference distance by a particular rate in the particular direction, as a corner point of the second quadrangle (320).

2. The image processing device (100) of claim 1, wherein the corner point is a pixel corresponding to each of the corners of a quadrangle (310, 320) included in the check pattern.

3. The image processing device (100) of claim 2, wherein the feature point comprises a plurality of points, and
the controller(110) determines feature points existing within a particular region of the input images, among the plurality of feature points, as candidate feature points, wherein the particular region is a region where pixels within a reference pixel distance range from a particular pixel of the input images are positioned and
detects a pixel corresponding to average coordinates of the candidate feature points, as the representative feature point.

4. The image processing device (100) of claim 3, wherein the average coordinates of the candidate feature points are pixel coordinates corresponding to an average pixel distance of the candidate feature points from a particular pixel of the input images.

5. The image processing device (100) of claim 1 to 4, wherein the topology information includes at least one of pixel coordinates and index information with respect to the corner points.

6. The image processing device (100) of claim 1, wherein the controller (110) detects a pixel (P200) corresponding to average coordinates of pixels included in the reference quadrangle (200), as a center pixel, and
detects four representative feature points (P210, P220, P230, P240) closest to the center pixel (P200) among the plurality of representative feature points existing in each of quadrants based on a vertical axis and a horizontal axis including the center pixel, as reference corner points, as the four reference corner points.

7. The image processing device of claim 6, wherein the controller (110) detects corner points corresponding to respective corners of quadrangles included in the check pattern based on the reference corner points, and detects the topology information based on the corner points corresponding to the respective corners of the quadrangles.

8. The image processing device (100) of claim 1 to 7,
wherein the controller (110) selects a plurality of candidate light centers within a reference pixel range,
detects a candidate corner point by performing correction to distortion generated by a camera and homography, which is a mathematical conversion between two images having different views, on the corner points based on each of the plurality of candidate light centers,
extracts offsets between respective candidate corner points detected based on each of the plurality of candidate light centers and theoretical corner points, and
determines a candidate light center corresponding to a minimum offset among the offsets extracted based on each of the plurality of candidate light centers, as an optimal light center.

9. The image processing device (100) of claim 8, wherein the controller (110) extracts the offset with respect to each of all the corner points corresponding to the particular pattern,
extracts an average offset of the extracted offsets, and
determines a candidate light center corresponding to a minimum average offset among the average offsets extracted based on each of the plurality of candidate light centers, as an optimal light center.

10. The image processing device (100) of claim 8, wherein the controller (110) detects a reference corner point corresponding to a reference pattern included in the particular pattern from the topology information based on the result obtained by performing the correction to distortion and homography, and
detects the plurality of theoretical corner points based on the reference corner point,
wherein the plurality of theoretical corner points are pixels disposed to be separated by a predetermined pixel distance in a particular direction based on the reference corner point,

11. The image processing device (100) of claim 1 to 10, wherein the input images include a front image, a rear image, a leftward image, and a rightward image of the vehicle, and
the controller (110) performs correction to distortion generated by a camera and homography, which is a mathematical conversion between two images having different views, on each of the front image, the rear image, the leftward image, and the rightward image of the vehicle based on the optimal light center, and matches the front image, the rear image, the leftward image, and the rightward image of the vehicle based on the result obtained by performing the correction to distortion and homography to generate a top-view with respect to the vehicle.

12. An image processing method comprising:
obtaining (S110) input images captured by a plurality of cameras mounted in a vehicle via an image obtaining unit (120);
determining (S140) an optimal light center corresponding to each of the plurality of cameras using topology information of the input images,
**characterized by** further comprising:
detecting (S130, S133) topology information with respect to corner points of a check pattern included in the input images; and
determining (S140) the optimal light center based on the topology information,
wherein the topology information includes a plurality of representative feature points representing a shape feature of the particular pattern included in the input images,
wherein the method is further comprising:
detecting (S132) four reference corner points among the plurality of representative feature points, wherein the four reference corner points are corresponding to respective corners of a reference quadrangle included in the check pattern,
extracting a first reference distance between two reference corner points adjacent in a particular direction among the four reference corner points,
detecting a representative feature point closest to a position obtained by multiplying the first reference distance by a particular rate in the particular direction, as a corner point of a first quadrangle adjacent to the reference quadrangle,
extracting a second reference distance between two reference corner points adjacent in a particular direction among the four reference corner points,
detecting a representative feature point closest to a position obtained by multiplying the second reference distance by a particular rate in the particular direction, as a corner point of the first quadrangle adjacent to the reference quadrangle,
extracting a third reference distance between two corner points adjacent in a particular direction among the corner points of the first quadrangle, and
detecting a representative feature point closest to a position obtained by multiplying the third reference distance by a particular rate in the particular direction, as a corner point of a second quadrangle
extracting a fourth reference distance between two corner points adjacent in a particular direction among the corner points of the first quadrangle, and
detecting a representative feature point closest to a position obtained by multiplying the fourth reference distance by a particular rate in the particular direction, as a corner point of the second quadrangle.

## Patentansprüche

1. Bildverarbeitungsvorrichtung (100), welche umfasst:
eine Bilderfassungseinheit (120), die Eingangsbilder erhält, die von einer Vielzahl von Kameras erfasst werden, die in einem Fahrzeug angebracht sind; und
eine Steuerung (110), die einen optimalen Lichtmittelpunkt entsprechend jeder der Vielzahl von Kameras bestimmt,
**dadurch gekennzeichnet, dass**:
die Steuerung (110) Topologieinformation zu Eckpunkten eines in den Eingangsbildern enthaltenen Prüfmusters erfasst und anhand der Topologieinformation den optimalen Lichtmittelpunkt bestimmt,
wobei die Topologieinformation eine Vielzahl von repräsentativen Merkmalspunkten umfasst, die ein Formmerkmal des in den Eingangsbildern enthaltenen bestimmten Musters repräsentieren,
wobei die Steuerung (110) ferner dazu eingerichtet ist:
vier Referenzeckpunkte (P210, P220, P230, P240) unter der Vielzahl an repräsentativen Merkmalspunkten zu erfassen, wobei die vier Referenzeckpunkte (P210, P220, P230, P240) entsprechenden Ecken eines in dem Prüfmuster enthaltenen Referenzvierecks (200) entsprechen,
einen ersten Referenzabstand (D110) zwischen zwei in einer bestimmten Richtung benachbarten Referenzeckpunkten (P210, P240) unter den vier Referenzeckpunkten (P210, P220, P230, P240) zu extrahieren,
einen repräsentativen Merkmalspunkt (P310), der einer Position (P250) am nächsten ist, die durch Multiplizieren des ersten Referenzabstands (D110) mit einem bestimmten Verhältnis in der bestimmten Richtung erhalten wird, als einen Eckpunkt eines ersten Vierecks (310) neben dem Referenzviereck (200) zu erfassen,
einen zweiten Referenzabstand zwischen zwei in einer bestimmten Richtung benachbarten Referenzeckpunkten (P220, P230) unter den vier Referenzeckpunkten (P210, P220, P230, P240) zu extrahieren,
einen repräsentativen Merkmalspunkt (P320), der einer Position am nächsten ist, die durch Multiplizieren des zweiten Referenzabstands mit einem bestimmten Verhältnis in der bestimmten Richtung erhalten wird, als einen Eckpunkt des ersten Vierecks (310) neben dem Referenzviereck (200) zu erfassen,
einen dritter Referenzabstand (D120) zwischen zwei in einer bestimmten Richtung benachbarten Eckpunkten (P210, P310) unter den Eckpunkten (P210, P310, P220, P320) des ersten Vierecks (310) zu extrahieren,
einen repräsentativen Merkmalspunkt (P410), der einer Position (P260) am nächsten ist, die durch Multiplizieren des dritten Referenzabstands (D120) mit einem bestimmten Verhältnis in der bestimmten Richtung erhalten wird, als einen Eckpunkt eines zweiten Vierecks (320) zu erfassen,
einen vierten Referenzabstand zwischen zwei in einer bestimmten Richtung benachbarten Eckpunkten (P220, P320) unter den Eckpunkten (P210, P310, P220, P320) des ersten Vierecks (310) zu extrahieren, und
einen repräsentativen Merkmalspunkt (P420), der einer Position am nächsten ist, die durch Multiplizieren des vierten Referenzabstands mit einem bestimmten Verhältnis in der bestimmten Richtung erhalten wird, als einen Eckpunkt des zweiten Vierecks (320) zu erfassen.

2. Bildverarbeitungsvorrichtung (100) nach Anspruch 1,
wobei der Eckpunkt ein Bildpunkt ist, der jeder der Ecken eines in dem Prüfmuster enthaltenen Vierecks (310, 320) entspricht.

3. Bildverarbeitungsvorrichtung (100) nach Anspruch 2, wobei der Merkmalspunkt eine Vielzahl von Punkten umfasst, und
die Steuerung (110) in einem bestimmten Bereich der Eingangsbilder vorhandene Merkmalspunkte unter der Vielzahl von Merkmalspunkten als Kandidatenmerkmalspunkte ermittelt, wobei der bestimmte Bereich ein Bereich ist, in dem Bildpunkte innerhalb eines Referenzpixelabstandsbereichs von einem bestimmten Bildpunkt der Eingangsbilder gelegen sind, und
als repräsentativen Merkmalspunkt einen mittleren Koordinaten der Kandidatenmerkmalspunkte entsprechenden Bildpunkt erfasst.

4. Bildverarbeitungsvorrichtung (100) nach Anspruch 3, wobei die mittleren Koordinaten der Kandidatenmerkmalspunkte Bildpunktkoordinaten sind, die einem mittleren Bildpunktabstand der Kandidatenmerkmalspunkte von einem bestimmten Bildpunkt der Eingabebilder entsprechen.

5. Bildverarbeitungsvorrichtung (100) nach Anspruch 1 bis 4, wobei die Topologieinformation Bildpunktkoordinaten und/oder Indexinformation bezüglich der Eckpunkte umfassen.

6. Bildverarbeitungsvorrichtung (100) nach Anspruch 1, wobei die Steuerung (110) einen Bildpunkt (P200), der mittleren Koordinaten von Bildpunkten entspricht, die in dem Referenzviereck (200) enthalten sind, als einen Mittelpunktbildpunkt erfasst, und
vier repräsentative Merkmalspunkte (P210, P220, P230, P240), die dem Mittelpunktbildpunkt (P200) am nächsten sind, unter der Vielzahl von repräsentativen Merkmalspunkten, die in jedem der Quadranten vorkommen, basierend auf einer vertikalen Achse und einer den Mittelpunktbildpunkt enthaltenen horizontalen Achse, als Bezugseckpunkte, als die vier Bezugseckpunkte erfasst.

7. Bildverarbeitungsvorrichtung nach Anspruch 6, wobei die Steuerung (110) basierend auf den Bezugseckpunkten Eckpunkte erfasst, die jeweiligen Ecken von Vierecken entsprechen, die in dem Prüfmuster enthalten sind, und die Topologieinformation basierend auf den Eckpunkten, die den jeweiligen Ecken der Vierecke entsprechen, erfasst.

8. Bildverarbeitungsvorrichtung (100) nach Anspruch 1 bis 7,
wobei die Steuerung (110) innerhalb eines Referenzbildpunktbereichs eine Vielzahl von Kandidatenlichtmittelpunkten auswählt,
einen Kandidateneckpunkt erfasst durch Durchführen einer Korrektur einer durch eine Kamera erzeugten Verzeichnung und einer Homographie an den Eckpunkten basierend auf jedem der mehreren Kandidatenlichtmittelpunkten, wobei die Homographie eine mathematische Umrechnung zwischen zwei Bildern mit unterschiedlichen Ansichten ist,
Versätze zwischen jeweiligen Kandidateneckpunkten extrahiert, die basierend auf jedem der Vielzahl von Kandidatenlichtmittelpunkten und theoretischen Eckpunkten erfasst werden, und
einen Kandidatenlichtmittelpunkt entsprechend einem minimalen Versatz unter den auf der Basis von jedem der Vielzahl von Kandidatenlichtmittelpunkten extrahierten Versätzen als einen optimalen Lichtmittelpunkt bestimmt.

9. Bildverarbeitungsvorrichtung (100) nach Anspruch 8, wobei die Steuerung (110) den Versatz in Bezug auf jeden von allen Eckpunkten entsprechend dem bestimmten Muster extrahiert,
einen mittleren Versatz der extrahierten Versätze extrahiert, und
einen Kandidatenlichtmittelpunkt entsprechend einem minimalen mittleren Versatz unter auf der Basis von jedem der Vielzahl von Kandidatenlichtmittelpunkten extrahierten durchschnittlichen Versätzen als einen optimalen Lichtmittelpunkt bestimmt.

10. Bildverarbeitungsvorrichtung (100) nach Anspruch 8, wobei die Steuerung (110) einen Referenzeckpunkt erfasst, der einem in dem bestimmten Muster enthaltenen Referenzmuster entspricht, aus der Topologieinformation basierend auf dem Ergebnis, das durch Ausführen der Korrektur der Verzerrung und der Homographie erhalten wird, und
basierend auf dem Referenzeckpunkt die Vielzahl von theoretischen Eckpunkten erfasst,
wobei die Vielzahl von theoretischen Eckpunkten Bildpunkte sind, die angeordnet sind, um durch einen vorbestimmten Bildpunktabstand in einer bestimmten Richtung basierend auf dem Referenzeckpunkt getrennt zu werden.

11. Bildverarbeitungsvorrichtung (100) nach Anspruch 1 bis 10, wobei die Eingangsbilder ein vorderes Bild, ein hinteres Bild, ein linkes Bild und ein rechtes Bild des Fahrzeugs umfassen, und
die Steuerung (110) eine Korrektur an einer durch eine Kamera erzeugten Verzeichnung und eine Homographie durchführt, wobei die Homographie eine mathematische Umrechnung zwischen zwei Bildern mit unterschiedlichen Ansichten ist, auf jeweils dem vorderen Bild, dem hinteren Bild, dem linken Bild und dem rechten Bild des Fahrzeugs basierend auf dem optimalen Lichtmittelpunkt, und
das vordere Bild, das hintere Bild, das linke Bild und das rechte Bild des Fahrzeugs basierend auf dem Ergebnis, das durch Ausführen der Korrektur der Verzerrung und der Homographie erhalten wird, zusammenfügt, um eine Draufsicht bezüglich des Fahrzeugs zu erhalten.

12. Bildverarbeitungsverfahren, welches umfasst:
Erhalten (S110) von Eingangsbildern, die von einer Vielzahl von Kameras erfasst wurden, die in einem Fahrzeug über einer Bildaufnahmeeinheit (120) angebracht sind;
Bestimmen (S140) eines optimalen Lichtmittelpunkts entsprechend jeder der Vielzahl von Kameras, unter Verwendung von Topologieinformation der Eingangsbilder,
**dadurch gekennzeichnet, dass** das Verfahren ferner umfasst:
Erfassen (S130, S133) von Topologieinformation zu Eckpunkten eines in den Eingangsbildern enthaltenen Prüfmusters; und
Bestimmen (S140) des optimalen Lichtmittelpunkts basierend auf der Topologieinformation,
wobei die Topologieinformation eine Vielzahl von repräsentativen Merkmalspunkten umfasst, die ein Formmerkmal des in den Eingangsbildern enthaltenen bestimmten Musters repräsentieren,
wobei das Verfahren ferner die folgenden Schritte umfasst:
Erfassen (S132) von vier Referenzeckpunkten unter der Vielzahl an repräsentativen Merkmalspunkten, wobei die vier Referenzeckpunkte entsprechenden Ecken eines in dem Prüfmuster enthaltenen Referenzvierecks entsprechen,
Extrahieren eines ersten Referenzabstands zwischen zwei in einer bestimmten Richtung benachbarten Referenzeckpunkten unter den vier Referenzeckpunkten,
Erfassen eines repräsentativen Merkmalspunkts, der einer Position am nächsten ist, die durch Multiplizieren des ersten Referenzabstands mit einem bestimmten Verhältnis in der bestimmten Richtung erhalten wird, als einen Eckpunkt eines ersten Vierecks neben dem Referenzviereck,
Extrahieren eines zweiten Referenzabstands zwischen zwei in einer bestimmten Richtung benachbarten Referenzeckpunkten unter den vier Referenzeckpunkten,
Erfassen eines repräsentativen Merkmalspunkts, der einer Position am nächsten ist, die durch Multiplizieren des zweiten Referenzabstands mit einem bestimmten Verhältnis in der bestimmten Richtung erhalten wird, als einen Eckpunkt des ersten Vierecks neben dem Referenzviereck,
Extrahieren eines dritten Referenzabstands zwischen zwei in einer bestimmten Richtung benachbarten Eckpunkten unter den Eckpunkten des ersten Vierecks, und
Erfassen eines repräsentativen Merkmalspunkts, der einer Position am nächsten ist, die durch Multiplizieren des dritten Referenzabstands mit einem bestimmten Verhältnis in der bestimmten Richtung erhalten wird, als einen Eckpunkt eines zweiten Vierecks,
Extrahieren eines vierten Referenzabstands zwischen zwei in einer bestimmten Richtung benachbarten Eckpunkten unter den Eckpunkten des ersten Vierecks, und
Erfassen eines repräsentativen Merkmalspunkts, der einer Position am nächsten ist, die durch Multiplizieren des vierten Referenzabstands mit einem bestimmten Verhältnis in der bestimmten Richtung erhalten wird, als einen Eckpunkt des zweiten Vierecks.

## Revendications

1. Dispositif de traitement d'images (100) comprenant :
une unité d'obtention d'images (120) qui obtient des images d'entrée capturées par une pluralité de caméras montées dans un véhicule ; et
un organe de commande (110) qui détermine un centre lumineux optimal correspondant à chaque caméra de la pluralité de caméras,
**caractérisé en ce que** :
l'organe de commande (110) détecte des informations de topologie par rapport à des points corniers d'un motif en damiers compris dans les images d'entrée et détermine le centre lumineux optimal sur la base des informations de topologie,
les informations de topologie comprenant une pluralité de points d'élément représentant un élément de forme du motif particulier compris dans les images d'entrée,
l'organe de commande (110) étant en outre conçu pour :
détecter quatre points corniers de référence (P210, P220, P230, P240) parmi la pluralité de points d'élément représentatifs, les quatre points corniers de référence (P210, P220, P230, P240) correspondant aux coins respectifs d'un quadrangle de référence (200) compris dans le motif en damiers,
extraire une première distance de référence (D110) entre deux points corniers de référence (P210, P240) adjacents dans un sens particulier parmi les quatre points corniers de référence (P210, P220, P230, P240),
détecter un point d'élément représentatif (P310) le plus proche d'une position (P250) obtenu par multiplication de la première distance de référence (D110) par une vitesse particulière dans le sens particulier, comme un point cornier d'un premier quadrangle (310) adjacent au quadrangle de référence (200),
extraire une deuxième distance de référence entre deux points corniers de référence (P220, P230) adjacents dans un sens particulier parmi les quatre points corniers de référence (P210, P220, P230, P240),
détecter un point d'élément de référence (P320) le plus proche d'une position obtenue par multiplication de la seconde distance de référence par une vitesse particulier dans le sens particulier, en tant que point cornier du premier quadrangle (310) adjacent au quadrangle de référence (200),
extraire une troisième distance de référence (D210) entre deux points corniers (P210, P310) adjacents dans un sens particulier parmi les points corniers (P210, P310, P220, P320) du premier quadrangle (310),
détecter un point d'élément représentatif (P410) le plus proche d'une position (P260) obtenu par multiplication de la troisième distance de référence (D120) par une vitesse particulière dans le sens particulier, en tant que point cornier d'un second quadrangle (320),
extraire une quatrième distance entre deux points corniers (P220, P320) adjacents dans un sens particulier parmi les points corniers (P210, P310, P220, P320) du premier quadrangle (310), et
détecter un point d'élément représentatif (P420) le plus proche d'une position obtenue par multiplication de la quatrième distance par une vitesse particulière dans le sens particulier, en tant que point cornier du second quadrangle (320).

2. Dispositif de traitement d'images (100) selon la revendication 1,
le point cornier étant un pixel correspondant à chacun des coins du quadrangle (310, 320) compris dans le motif en damiers.

3. Dispositif de traitement d'images (100) selon la revendication 2, le point d'élément comprenant une pluralité de points, et
l'organe de commande (110) déterminant des points d'élément existant dans une région particulière des images d'entrée, parmi la pluralité de points d'élément, en tant que points d'élément candidats, la région particulière étant une région où les pixels dans une plage de distance de pixel de référence à partir d'un pixel particulier des images d'entrée sont positionnés et
détectant un pixel correspondant à des coordonnées moyennes des points d'élément candidats, en tant que point d'élément représentatif.

4. Dispositif de traitement d'images (100) selon la revendication 3, les coordonnées moyennes des points d'élément candidats étant des coordonnées de pixel correspondant à une distance de pixel moyenne des points d'élément candidats à partir d'un pixel particulier des images d'entrée.

5. Dispositif de traitement d'images (100) selon la revendication 1 à 4, les informations de topologie comprenant au moins les coordonnées de pixel et/ou des informations d'indice par rapport aux points corniers.

6. Dispositif de traitement d'images (100) selon la revendication 1, l'organe de commande (110) détectant un pixel (P200) correspondant à des coordonnées moyennes de pixels compris dans le quadrangle de référence (200), en tant que pixel central, et
détectant quatre points d'élément représentatifs (P210, P220, P230, P240) les plus proches du pixel central (P200) parmi la pluralité de points d'élément représentatifs existant dans chacun des quadrants en fonction d'un axe vertical et d'un axe horizontal comprenant le pixel central, en tant que points corniers de référence, comme les quatre points corniers de référence.

7. Dispositif de traitement d'images (100) selon la revendication 6, l'organe de commande (110) détectant des points corniers correspondant aux coins respectifs des quadrangles compris dans le motif en damiers sur la base des points corniers de référence, et détectant les informations de topologie sur la base des points corniers correspondant aux coins respectifs des quadrangles.

8. Dispositif de traitement d'images (100) selon la revendication 1 à 7,
l'organe de commande (110) sélectionnant une pluralité de centres lumineux candidats dans une plage de pixel de référence,
détectant un point cornier candidat par correction d'une distorsion générée par une caméra et l'homographie, qui est une conversion mathématique entre deux images ayant des vues différentes, sur les points corniers en fonction de chaque centre lumineux candidats de la pluralité de centres lumineux candidats,
extrayant des écarts entre les points corniers candidats respectifs détectés sur la base de chaque centre lumineux candidats de la pluralité des centres lumineux candidats et des points corniers théoriques, et
déterminant un centre lumineux candidat correspondant à un écart minimum parmi les écarts extraits sur la base de chaque centre lumineux candidats de la pluralité des centres lumineux candidats, en tant que centre lumineux optimal.

9. Dispositif de traitement d'images (100) selon la revendication 8, l'organe de commande (100) extrait l'écart par rapport à chacun de tous les points corniers correspondant au motif particulier,
extrait un écart moyen des écarts extraits, et
détermine un centre lumineux candidat correspondant à un écart moyen minimum parmi les écarts moyens extraits sur la base de chaque centre lumineux candidat de la pluralité des centres lumineux candidats, comme un centre lumineux optimal.

10. Dispositif de traitement d'images (100) selon la revendication 8, l'organe de commande (110) détectant un point cornier de référence correspondant à un motif de référence compris dans le motif particulier à partir des informations de topologie sur la base du résultat obtenu par la correction de la distorsion et de l'homographie, et
détectant la pluralité des points corniers théoriques sur la base du point cornier de référence,
la pluralité des points corniers théoriques étant des pixels conçus pour être séparés à une distance de pixel prédéfinie dans un sens particulier sur la base du point cornier de référence.

11. Dispositif de traitement d'images (100) selon la revendication 1 à 10, les images d'entrée comprenant une image avant, une image arrière, une image gauche et une image droite du véhicule, et
l'organe de commande (110) corrigeant la distorsion générée par une caméra et l'homographie, qui est une conversion mathématique entre deux images ayant des vues différentes, sur l'image avant, l'image arrière, l'image gauche et l'image droite du véhicule sur la base du centre lumineux optimal, et fait correspondre l'image avant, l'image arrière, l'image gauche et l'image droite du véhicule sur la base du résultat obtenu par la correction de la distorsion et l'homographie pour générer une vue de dessus par rapport au véhicule.

12. Procédé de traitement d'images consistant à :
obtenir (S110) des images d'entrée capturées par une pluralité de caméras montées dans un véhicule par l'intermédiaire d'une unité d'obtention d'images (120) ;
déterminer (S140) un centre lumineux optimal correspondant à chaque caméra de la pluralité de caméras se servant des informations de topologie des images d'entrée,
**caractérisé en ce qu'**il consiste en outre à :
détecter (S130, S133) les informations de topologie par rapport aux points corniers d'un motif en damiers compris dans les images d'entrée ; et
déterminer (S140) le centre lumineux optimal sur la base des informations de topologie,
les informations de topologie comprenant une pluralité de points d'élément représentant un élément de forme du motif particulier compris dans les images d'entrée,
le procédé consistant en outre à :
détecter (S132) quatre points corniers de référence parmi la pluralité de points d'élément représentatif, les quatre points corniers de référence correspondant aux coins respectifs d'un quadrangle de référence dans le motif en damiers,
extraire une première distance de référence entre deux points corniers adjacents dans un sens particulier parmi les quatre points corniers de référence,
détecter un point d'élément représentatif le plus proche d'une position obtenue par multiplication de la première distance par une vitesse particulière dans le sens particulier, comme point cornier d'un premier quadrangle adjacent au quadrangle de référence,
extraire une deuxième distance de référence entre deux points corniers de référence adjacents dans un sens particulier parmi les quatre points corniers de référence,
détecter un point d'élément représentatif le plus proche d'une position obtenue par multiplication de la deuxième distance de référence par une vitesse particulière dans le sens particulier, comme point cornier du premier quadrangle adjacent au quadrangle de référence,
extraire une troisième distance de référence entre deux points corniers adjacents dans un sens particulier parmi les points corniers du premier quadrangle, et
détecter un point d'élément représentatif le plus proche d'une position obtenue par multiplication de la troisième distance de référence par une vitesse particulière dans le sens particulier, comme point cornier d'un second quadrangle,
extraire une quatrième distance de référence entre deux points corniers adjacents dans un sens particulier parmi les points corniers du premier quadrangle, et
détecter un point d'élément représentatif le plus proche d'une position obtenue par multiplication de la quatrième distance de référence par une vitesse particulière dans le sens particulier, comme point cornier du second quadrangle.
